(19) Europäisches Patentamt
European Patent Office
Office européen des brevets

(11) EP 2 258 745 B1

(12) # EUROPEAN PATENT SPECIFICATION

(45) Date of publication and mention of the grant of the patent:
**16.07.2014 Bulletin 2014/29**

(21) Application number: **09724920.5**

(22) Date of filing: **19.03.2009**

(51) Int Cl.:
***C08G 64/34*** *(2006.01)* ***C08G 18/65*** *(2006.01)*
***C08G 18/10*** *(2006.01)* ***C08G 18/42*** *(2006.01)*
***C08G 18/44*** *(2006.01)*

(86) International application number:
**PCT/JP2009/055477**

(87) International publication number:
**WO 2009/119454 (01.10.2009 Gazette 2009/40)**

(54) **HYDROXY COMPOUND, PROCESS FOR PRODUCTION THEREOF, AND PREPOLYMER AND POLYURETHANE EACH COMPRISING THE HYDROXY COMPOUND**

HYDROXIDVERBINDUNG, VERFAHREN ZU IHRER HERSTELLUNG SOWIE PRÄPOLYMER UND POYLURETHAN MIT DER HYDROXIDVERBINDUNG

COMPOSÉ HYDROXY, SON PROCÉDÉ DE FABRICATION ET PRÉPOLYMÈRE ET POLYURÉTHANE COMPRENANT CHACUN LE COMPOSÉ HYDROXY

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **25.03.2008 JP 2008079025**

(43) Date of publication of application:
**08.12.2010 Bulletin 2010/49**

(73) Proprietor: **Asahi Glass Company, Limited**
**Chiyoda-ku**
**Tokyo 100-8405 (JP)**

(72) Inventors:
- **SASAO, Yasuyuki**
  **Tokyo 100-8405 (JP)**
- **SUZUKI, Chitoshi**
  **Tokyo 100-8405 (JP)**
- **OHORI, Tomeyoshi**
  **Tokyo 100-8405 (JP)**

(74) Representative: **Hartz, Nikolai**
**Wächtershäuser & Hartz**
**Patentanwaltspartnerschaft mbB**
**Weinstrasse 8**
**80333 München (DE)**

(56) References cited:
**EP-A1- 1 219 655** **EP-A1- 1 707 586**
**WO-A1-2006/103213** **JP-A- 7 053 757**
**JP-A- 62 250 031** **JP-A- 2007 126 547**
**US-A- 4 948 845** **US-A1- 2008 021 154**

- **TAKUZO AIDA ET AL: "Synthesis of polyether-polycarbonate block copolymer from carbon dioxide and epoxide using a metalloporphyrin catalyst system", MACROMOLECULES, vol. 15, no. 2, 1 March 1982 (1982-03-01), pages 682-684, XP055077529, ISSN: 0024-9297, DOI: 10.1021/ma00230a095**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 258 745 B1

**Description**

TECHNICAL FIELD

The present invention relates to a hydroxy compound, a process for its production, a prepolymer obtained by using the hydroxy compound, and a polyurethane.

BACKGROUND ART

As a polyol to be used as a raw material for polyurethanes, a polyether diol or a polyester diol has heretofore been mainly used. However, a polycarbonate diol has attracted attention, since it is thereby possible to obtain a resin excellent in heat resistance, hydrolysis resistance, weather resistance.

However, a polycarbonate type resin has high rigidity and low elongation and thus has a problem such that it is inferior in flexibility as compared with the conventional resin (particularly the polyether type resin).

The following Patent Document 1 discloses a method for improving breaking elongation by introducing ether groups into the molecule of a polycarbonate diol. That is, a thermoplastic polyurethane is disclosed which is obtained by reacting a polyether carbonate diol having ether bonds introduced into the molecule of a polycarbonate diol, with a polyisocyanate and a chain extender. The polyether carbonate diol is produced by a method wherein a diol is subjected to an addition reaction with ethylene oxide and/or propylene oxide to form a polyether diol, and such a polyether diol is subjected to an alcohol-exchange reaction with a carbonate compound, whereupon a byproduct alcohol is distilled off.

Further, the following Patent Document 2 discloses polyurethane elastic fiber obtained by polymerizing a polycarbonate diol, an organic diisocyanate and a chain extender. The polycarbonate diol is produced by a method wherein a $C_{4-12}$ diol and a carbonate compound are subjected to an alcohol-exchange reaction, whereupon a byproduct alcohol is distilled off.

Patent Document 1: JP-A-2005-232447

Patent Document 2: JP-A-5-339816

Takuzo Aida et al. discloses a polyethercarbonate block copolymer prepared by reacting propylene oxide with carbon dioxide by using a polyether diol (a living prepolymer of propylene oxide) as an initiator of the polymerization reaction, and in the presence of a metalloporphyrin coordination catalyst (Macromolecules, vol. 15, issue 2, p. 682-684, 1982).

DISCLOSURE OF THE INVENTION

PROBLEM TO BE SOLVED BY THE INVENTION

However, the polyurethanes disclosed in the above Patent Documents 1 and 2 are not necessarily adequate in elongation, and further improvement of the elongation property is desired.

The present invention has been made under these circumstances, and it is an object of the present invention to provide a poly(mono)ol capable of producing an excellent polyurethane in elongation property, a prepolymer and a polyurethane obtained by using it.

MEANS TO SOLVE THE PROBLEM

In order to solve the above problem, the present invention provides the following.

<1> A hydroxy compound represented by the following formula (I):

$$B\text{-}A_m \qquad (I)$$

wherein A and B represent the following groups, and m represents an integer of from 1 to 8;

A: a univalent group which has a terminal hydroxy group and a carbonate chain composed of an ether unit produced by ring-opening of a monoepoxide and a carbonyloxy unit [-OC(O)-] linked to each other;

B: a m-valent residue produced by removing all hydroxy groups from a polycarbonate having m hydroxy groups at the terminals, provided that -O-R- in the repeating unit [-OC(O)-O-R-] of the polycarbonate is an ether unit other than an ether unit produced by ring-opening of a monoepoxide.

<2> The hydroxy compound according to <1>, wherein the number average molecular weight of the residue B is from 300 to 5,000; the number average molecular weight of the univalent group A is from 100 to 5,000; and the number average molecular weight of the entirety is from 500 to 15,000.

<3> The hydroxy compound according to <1> or <2>, wherein the mass ratio ($B/A_m$) of the residue B to the m

univalent groups A is from 1/9 to 9/1.

<4> The hydroxy compound according to any one of <1 > to <3>, wherein an ether group [-O-] not linked to the carbonyloxy unit may further be present in the m univalent groups A, and the molar ratio (carbonate group/ether group) of a carbonate group [-OC(O)-O-] to the ether group [-O-] not linked to the carbonyloxy unit is from 7/3 to 10/0.

<5> The hydroxy compound according to any one of <1> to <4>, wherein R in the residue B is at least one bivalent group selected from the group consisting of an alkylene group composed of from 3 to 20 consecutive methylene groups (provided that the alkylene group may have a $C_{1-12}$ side chain), an alkylenearylene group and an arylene group.

<6> The hydroxy compound according to any one of <1 > to <5>, wherein in the univalent group A, the ether unit produced by ring-opening of a monoepoxide is an oxyalkylene group produced by ring-opening of a $C_{2-20}$ monoepoxide.

<7> A process for producing a hydroxy compound, which comprises reacting a polycarbonate represented by the following formula (II) with a mixture of a monoepoxide and carbon dioxide in the presence of a polymerization catalyst (C) to produce a hydroxy compound represented by the following formula (I):

$$B\text{-}A_m \qquad (I)$$

$$B\text{-}(OH)_m \qquad (II)$$

wherein A and B represent the following groups, and m represents an integer of from 1 to 8;

A: a univalent group which has a terminal hydroxy group and a carbonate chain composed of an ether unit produced by ring-opening of a monoepoxide and a carbonyloxy unit [-OC(O)-] linked to each other;

B: a m-valent residue produced by removing all hydroxy groups from a polycarbonate having m hydroxy groups at the terminals, provided that -O-R- in the repeating unit [-OC(O)-O-R-] of the polycarbonate is an ether unit other than an ether unit produced by ring-opening of a monoepoxide.

<8> The process for producing a hydroxy compound according to <7>, wherein the polymerization catalyst (C) is a porphyrin type metal coordination complex catalyst.

<9> The process for producing a hydroxy compound according to <8>, wherein as the porphyrin type metal coordination complex catalyst, a porphyrin type metal coordination complex catalyst represented by the following formula (1) or (2) is used:

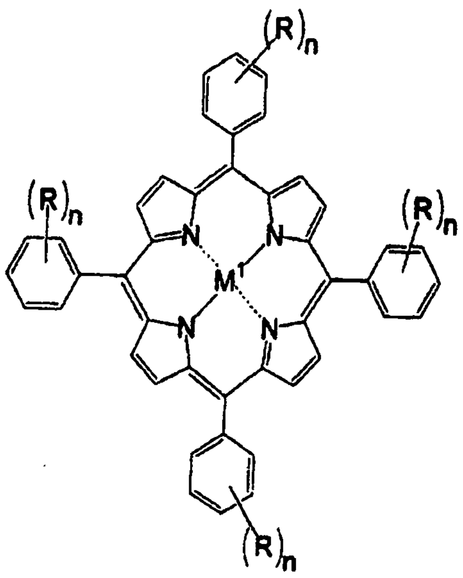
···(1)

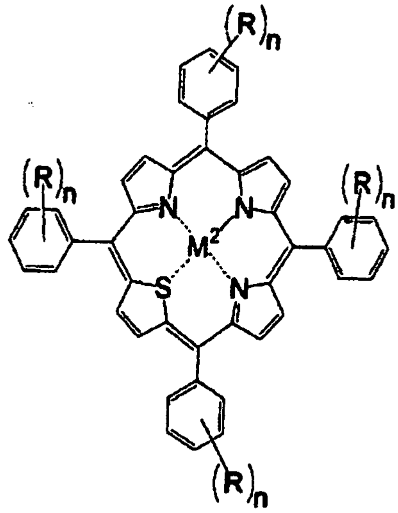
···(2)

wherein each R independently represents a methyl group, an ethyl group, a n-propyl group, an iso-propyl group, a n-butyl group, a sec-butyl group, an iso-butyl group, a tert-butyl group, a phenyl group, a methoxy group, an ethoxy group, a trifluoromethyl group, a fluorine atom, a chlorine atom or a bromine atom, n represents an integer of from 0 to 5, $M^1$ in the formula (1) represents a metal salt containing Co or Mn, and $M^2$ in the formula (2) represents a metal salt containing Ni.

<10> The process for producing a hydroxy compound according to <8> or <9>, wherein an amine-type promoter is used in combination with the catalyst.

<11> A prepolymer obtained by reacting a hydroxy compound as defined in any one of <1> to <6> wherein m is at least 2, with a polyisocyanate compound (D).

<12> A polyurethane obtained by reacting a prepolymer as defined in <11> with a chain extender (E).

ADVANTAGEOUS EFFECTS OF THE INVENTION

By using the hydroxy compound of the present invention, it is possible to give a polyurethane having excellent elongation property.

By using the prepolymer of the present invention, it is possible to give a polyurethane having excellent elongation property.

The polyurethane of the present invention is excellent in elongation property.

BEST MODE FOR CARRYING OUT THE INVENTION

The hydroxy compound of the present invention is represented by the above formula (I). In this specification, the hydroxy compound represented by the formula (I) may sometimes be referred to as the hydroxy compound (I). The hydroxy compound of the present invention is a polycarbonate poly(mono)ol. Further, in this specification, "poly(mono)ol" means a polyol or a monool. Further, the hydroxy compound (I) may sometimes be referred to as the poly(mono)ol (I).

The hydroxy compound (I) is obtainable by copolymerizing an initiator composed of a polycarbonate (b) having hydroxy groups, a monoepoxide (a) and carbon dioxide in the presence of a specific polymerization catalyst (C). The polymerization catalyst (C) is a polymerization catalyst to form an alternate copolymer chain of the monoepoxide (a) and carbon dioxide.

[INITIATOR: POLYCARBONATE (b)]

The polycarbonate (b) (hereinafter sometimes referred to as the component (b)) is represented by the above formula (II). "m" represents an integer of from 1 to 8. Further, B in the formula is a m-valent group produced by removing all hydroxy groups from a polycarbonate having m hydroxy groups at the terminals, and -O-R- in the repeating unit [-OC(O)-O-R-] of the polycarbonate is a unit other than an ether unit produced by ring-opening of a monoepoxide. This bivalent group R is preferably at least one bivalent group selected from the group consisting of an alkylene group composed of from 3 to 20 consecutive methylene groups (provided that each methylene group may have a $C_{1-12}$ side chain), an alkylenearylene group and an arylene group. The bivalent group R is particularly preferably an alkylene group composed of from 3 to 20 consecutive methylene groups (provided that each methylene group may have a $C_{1-12}$ side chain), since the polyurethane thereby obtainable is excellent in elongation property.

In the alkylene group composed of from 3 to 20 consecutive methylene groups, the number of carbon atoms in the side chain which each methylene group may have, is from 1 to 12, preferably from 1 to 3. Further, the number of consecutive methylene groups is more preferably from 3 to 10. In each case, the polyurethane thereby obtainable is excellent in elongation property. Specifically, a trimethylene group (a propane-1,3-diyl group), a tetramethylene group (a butan-1,4-diyl group), a pentamethylene group (a pentan-1,5-diyl group), a hexamethylene group (a hexan-1,6-diyl group), a heptamethylene group (a heptan-1,7-diyl), an octamethylene group (an octa-1,8-diyl group), a nonamethylene group (a nonan-1,9-diyl group), a decamethylene group (a decan-1,10-diyl group), a 2-methylbutan-2,3-diyl group, a 2,2-dimethylpropan-1,3-diyl group, a 2-methylpentan-1 ,5-diyl group, a 3-methylpentan-1,5-diyl group, a 2,2,4-trimethylhexan-1,6-diyl group, a 3,3,5-trimethylhexan-1,6-diyl group, a 2,3,5-trimethylpentan-1,5-diyl group or a 2-methyloctan-1,8-diyl group may, for example, be mentioned.

The alkylenearylene group is a bivalent group having at least one alkylene group and at least one arylene group combined. The number of carbon atoms in the alkylenearylene group is preferably from 7 to 30. Specific examples of the alkylenearylene group include $-CH_2-C_6H_4-$, $-CH_2-C_6H_4-CH_2-$, $-C_6H_4-CH_2-C_6H_4-$, $-C_6H_4-C(CH_3)_2-C_6H_4-$, $-CH_2-C_{10}H_6-CH_2-$, etc. Here, $-C_6H_4-$ represents a phenylene group, and $-C_{10}H_6-$ represents a naphthylene group.

The arylene group is a bivalent group having at least one aromatic ring and bonded to an aromatic ring. The number of carbon atoms in the arylene group is preferably from 6 to 30. Specific examples of the arylene group include a phenylene group, a naphthylene group, a biphenylene group, $-C_6H_3(CH_3)-$, etc.

A plurality of R in the repeating units [-OC(O)-O-R-] in the polycarbonate may be the same or different from one another.

The polycarbonate (b) is a polycarbonate having hydroxy group(s). That is, it may be a polycarbonate monool having one hydroxy group or a polycarbonate polyol having from 2 to 8 hydroxy groups. A polycarbonate diol having two hydroxy groups is preferred from such a viewpoint that a polyurethane made of a polycarbonate diol will be excellent in elongation property. The component (b) contains no ether bond.

The method for producing the component (b) is not particularly limited, and a known method may suitably be

employed. It is also available from commercial products. A polycarbonate diol as the component (b) is preferably one obtained by an alcohol exchange reaction of a diol compound (b1) with a carbonate compound (b2) selected from a dialkyl carbonate and a diaryl carbonate. In such an alcohol-exchange reaction of (b1) with (b2), if the diol compound (b1) is an $\alpha,\beta$-diol, it tends to form a ring structure with a carbonate compound (b2) without increasing the molecular weight, such being undesirable. For example, ethylene glycol or propylene glycol is undesirable.

As a diol compound (b1) whereby it is possible obtain the above-mentioned alkylene group having from 3 to 20 consecutive methylene groups, it is possible to employ, for example, 1,3-propanediol, 2-methyl-1,3-butanediol, 1,4-butanediol, neopentyl glycol, 1,5-pentanediol, 2-methylpentanediol, 3-methylpentanediol, 2,2,4-trimethyl-1,6-hexanediol, 3,3,5-trimethyl-1,6-hexanediol, 2,3,5-trimethylpentanediol, 1,6-hexanediol, 1,9-nonanediol or 2-methyl-1,8-octanediol. Among them, a diol having a relatively long chain such as neopentyl glycol, 1,5-pentanediol, 2-methylpentanediol, 3-methylpentanediol, 2,2,4-trimethyl-1 ,6-hexanediol, 3,3,5-trimethyl-1,6-hexanediol, 2,3,5-trimethylpentanediol, 1,6-hexanediol, 1,9-nonanediol or 2-methyl-1,8-octanediol, is preferred from the viewpoint of the flexibility.

A diol compound (b1) whereby it is possible to obtain the above-mentioned alkylenearylene group, may, for example, be hydroxymethylphenol, bishydroxymethylbenzene, bishydroxyphenylmethane, bisphenol A or bishydroxymethylnaphthalene.

A diol compound (b1) whereby it is possible to obtain the above-mentioned arylene group, may, for example, be dihydroxybenzene, dihydroxynaphthalene, biphenol, dihydroxytoluene or methyl resorcinol.

Such diol compounds (b1) may be used alone or in combination as a mixture of two or more of them.

A dialkyl carbonate as the carbonate compound (b2) is preferably dimethyl carbonate or diethyl carbonate. A diaryl carbonate is preferably diphenyl carbonate. Such carbonate compounds (b2) may be used alone or in combination as a mixture of two or more of them.

A preferred range of the number average molecular weight of the component (b) is a range within which the after-mentioned preferred range of the number average molecular weight of the residue B is obtainable.

Here, the weight average molecular weight (Mw) and the number average molecular weight (Mn) in this specification are values measured by gel permeation chromatography (GPC) and calculated as polystyrene.

As the component (b) to be used for the production of the poly(mono)ol (I), one type may be used alone or two or more types may be used in combination.

[MONOEPOXIDE (a)]

The monoepoxide (a) is a compound having one oxirane ring (epoxy group). Here, the oxirane ring may be substituted by a halogen atom or may have a substituent. The substituent is preferably a $C_{1-20}$ monovalent organic group, more preferably a $C_{1-10}$ alkyl group or aryl group, particularly preferably a $C_{1-3}$ alkyl group. As a specific monoepoxide, an ethylene oxide or a cyclohexene oxide may, for example, be mentioned. Here, the ethylene oxide is a general term for ethylene oxide and ethylene oxide having the above-mentioned substituent. Further, the cyclohexene oxide is a general term for cyclohexene oxide and cyclohexene oxide having the above substituent. Specific ethylene oxides may, for example, be compounds represented by the following formulae (a-1) to (a-12). Further, a specific cyclohexene oxide may, for example, be a compound represented by the following formula (a-13).

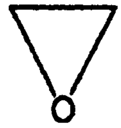
(a-1)

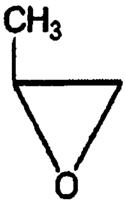
(a-2)

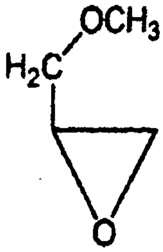
(a-3)

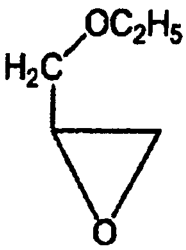
(a-4)

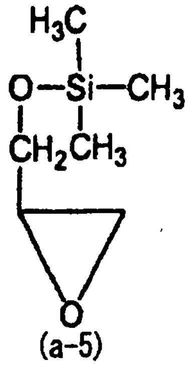
(a-5)

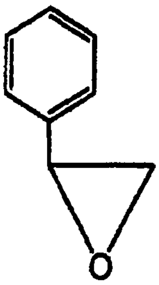
(a-6)

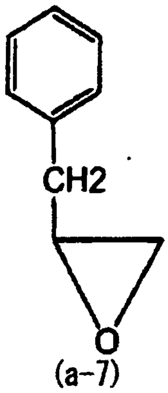
(a-7)

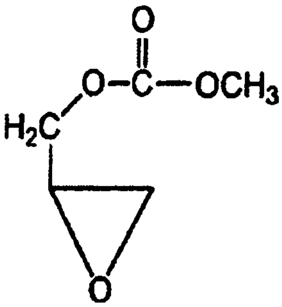
(a-8)

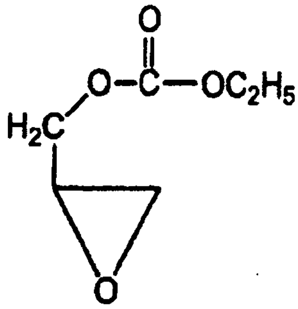
(a-9)

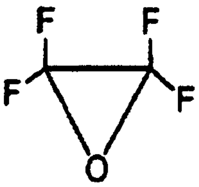
(a-10)

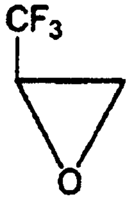
(a-11)

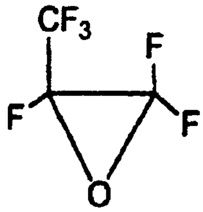
(a-12)

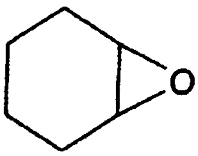
(a-13)

Among the above examples, ethylene oxide, propylene oxide, cyclohexene oxide or styrene oxide is preferred, and particularly preferred is propylene oxide represented by the compound (a-2) in view of its versality and relatively low glass transition point.

Monoepoxides (a) to be used for the production of poly(mono)ols (I) may be used alone or in combination as a mixture of two or more of them.

[POLYMERIZATION CATALYST (C)]

The polymerization catalyst (C) is a polymerization catalyst to form an alternate copolymer chain of the compound (a) and carbon dioxide. For example, a porphyrin type metal coordination complex (hereinafter sometimes referred to simply as "a metal complex") represented by the above formula (1) or (2) may be used. Other than such a metal complex, a known catalyst may be used as the polymerization catalyst to form an alternate copolymer of carbon dioxide and an epoxide. The polymerization catalyst (C) other than a metal complex may, for example, be a glutaric acid, a zinc oxide compound, a mixture of diethylzinc with water, a diethylzinc/rare earth metal complex, a double metal catalyst (DMC) composed of a hexacyano metal complex and zinc chloride, or a catalyst system composed of a combination of a Schiff base cobalt complex catalyst and a Lewis base promoter.

Such polymerization catalysts (C) may be used alone or in combination as a mixture of two or more of them.

Especially when the metal complex represented by the above formula (1) or (2) is employed, many carbonate groups will be formed by a copolymerization reaction of carbon dioxide with the compound (a), and it is possible to control formation of ether bonds by the polymerization reaction of the compound (a) itself to a minimum level. That is, it is possible to form the alternately copolymerized moieties of the compound (a) and carbon dioxide with high probability.

Further, it is possible to readily obtain a poly(mono)ol (I) having a narrow ratio of Mw/Mn (molecular weight distribution) i.e. a ratio of the weight average molecular weight Mw to the number average molecular weight Mn obtained

by GPC measurements. Specifically, it is possible to obtain a poly(mono)ol (I) having a smaller value of Mw/Mn than the component (b) employed as the initiator.

In the formula (1) or (2), each R independently represents a methyl group, an ethyl group, a n-propyl group, an iso-propyl group, a n-butyl group, a sec-butyl group, an iso-butyl group, a tert-butyl group, a phenyl group, a methoxy group, an ethoxy group, a trifluoromethyl group, a fluorine atom, a chlorine atom or a bromine atom. Particularly, R in the formula (1) is preferably a hydrogen atom, and R in the formula (2) is preferably a methyl group.

$M^1$ in the formula (1) represents a metal salt containing Co or Mn and is preferably Co(III)-Cl or Mn(III)-OAc, more preferably Co(III)-Cl (the numeral in the brackets represents valency number).

$M^2$ in the formula (2) represents a metal salt containing Ni and is preferably Ni(II)-Cl or Ni(II)-OAc, more preferably Ni(II)-Cl (the numeral in the brackets represents valency number).

In the formula (1) or (2), n represents an integer of from 0 to 5, and when n is 1, the substitution position of R is preferably p-position.

The metal complex represented by the formula (1) or (2) is preferably a metal complex represented by the following formula (1-1) or (2-1), more preferably a metal complex represented by the following formula (1-1), from such a viewpoint that the copolymerization reaction rate is high, and it is possible to obtain a copolymer having a high alternate copolymer ratio and narrow molecular weight distribution.

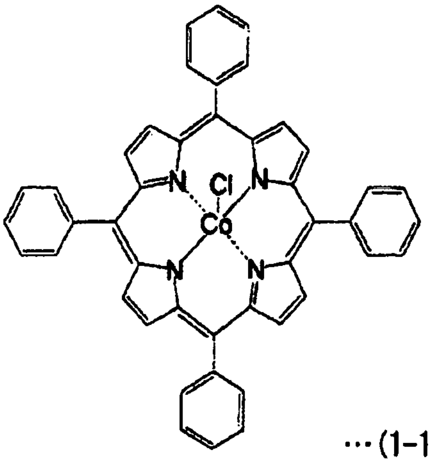

···(1-1)

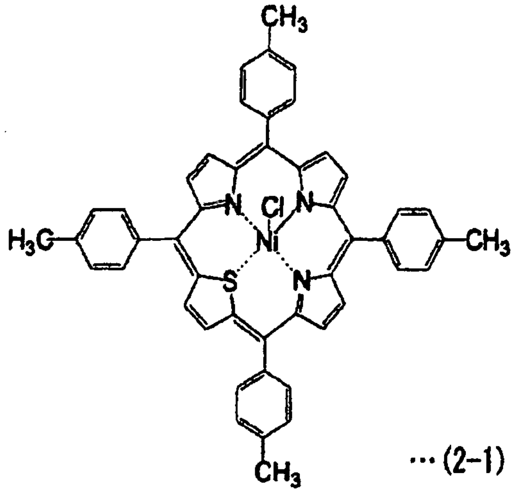

···(2-1)

On the other hand, from the viewpoint of the high activity as the catalyst and the solubility in supercritical carbon dioxide, it is preferably a metal complex of a multi-substituted porphyrin type compound of the formula (1) or (2) wherein n is at least 2. Here, in a case where n is at least 2, the plurality of R may, respectively, be different substituents or the same substituents, but from the viewpoint of the production efficiency, they are preferably the same substituents.

When n is 2, the substitution positions of R are preferably n-positions, and when n is 3, the substitution positions of R are preferably o-positions and p-positions. All positions may be substituted i.e. n may be 5.

Preferred metal complexes of multi-substituted porphyrin type compounds are metal complexes represented by the following formulae (1-2) to (1-4), and (2-2) to (2-4).

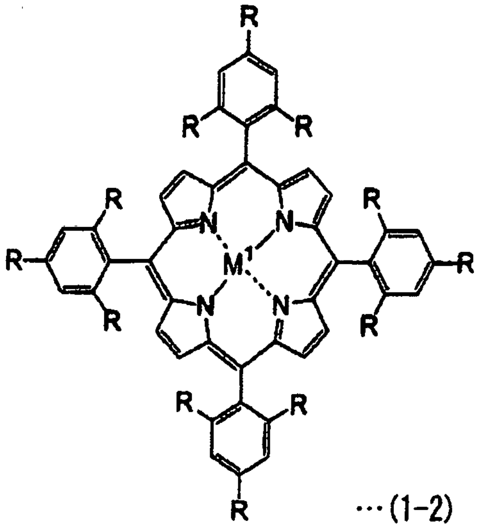

...(1-2)

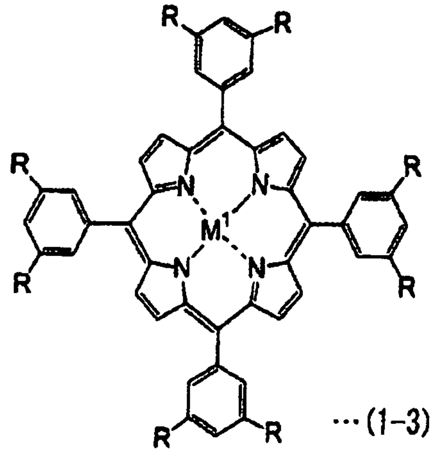

...(1-3)

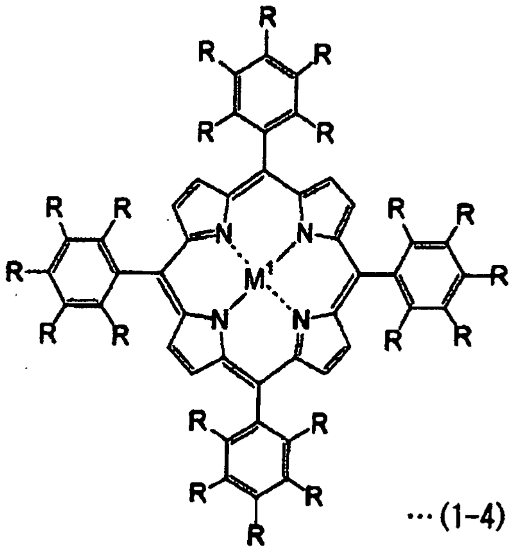

...(1-4)

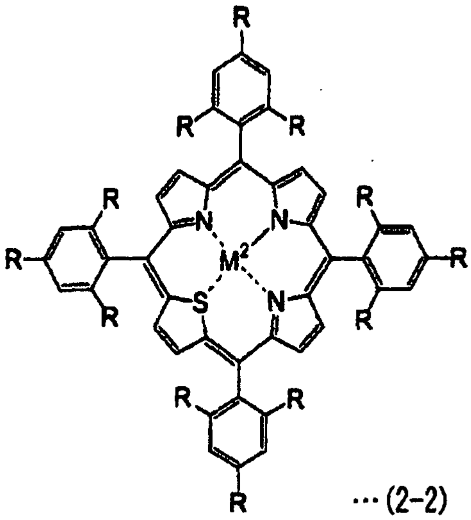

...(2-2)

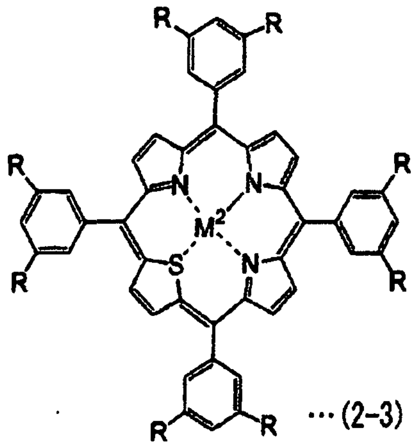

...(2-3)

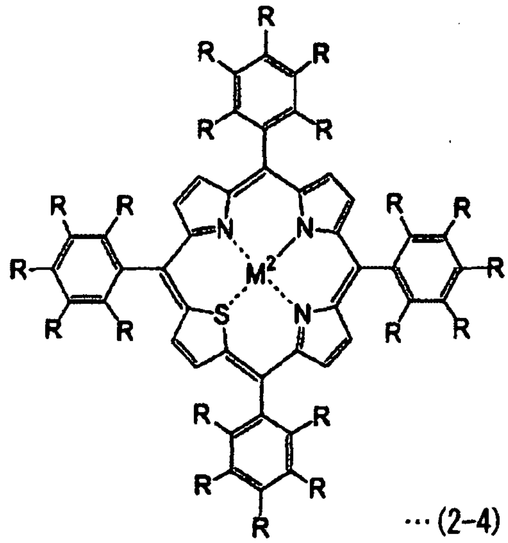

··· (2-4)

In the formulae (1-2) to (1-4) and (2-2) to (2-4), R has the same meaning as R in the above formulae (1) and (2). Further, R in the formula (1-2) or (2-2) is preferably a methoxy group, a fluorine atom, a chlorine atom or a bromine atom; R in the formula (1-3) or (2-3) is preferably a tert-butyl group; and R in the formula (1-4) or (2-4) is preferably a fluorine atom, a chlorine atom or a bromine atom.

$M^1$ and $M^2$ in the formulae (1-2) to (1-4) and (2-2) to (2-4) respectively have the same meanings as $M^1$ and $M^2$ in the above formulae (1) and (2).

Specific examples of the metal complex wherein a porphyrin type compound having a multi-substituted phenyl group is coordinated, are shown below, but not limited to such metal complexes.

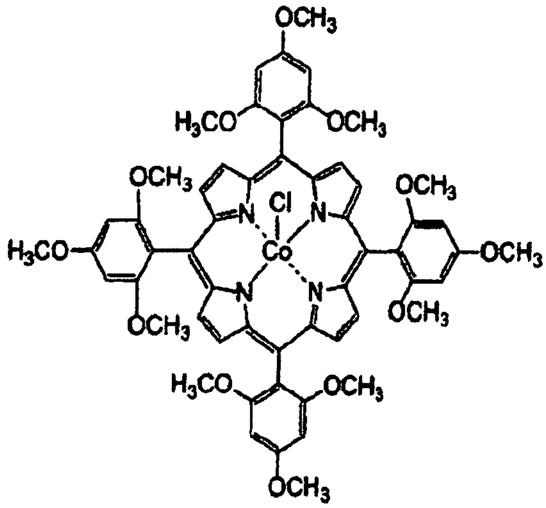

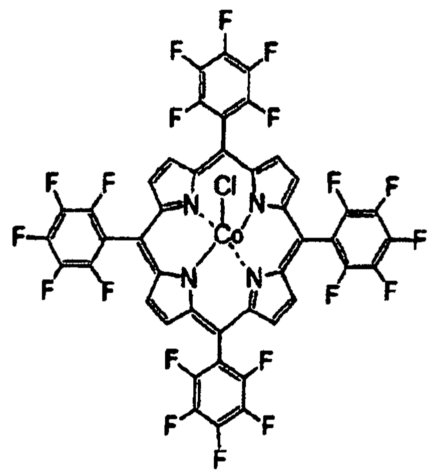

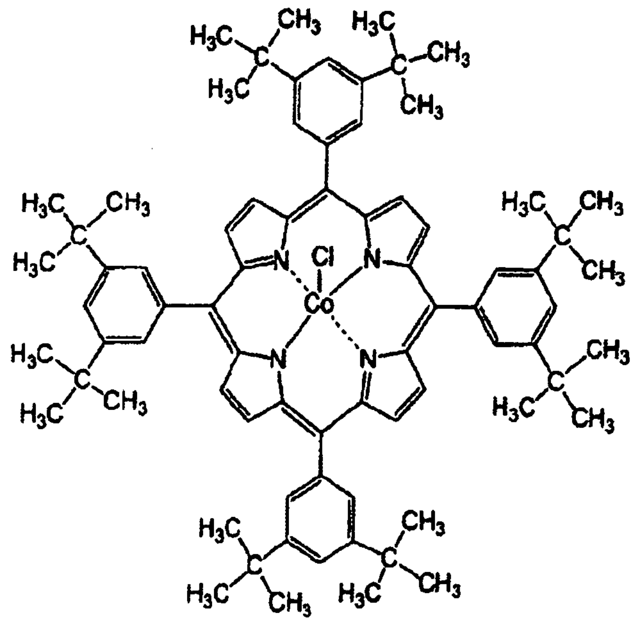

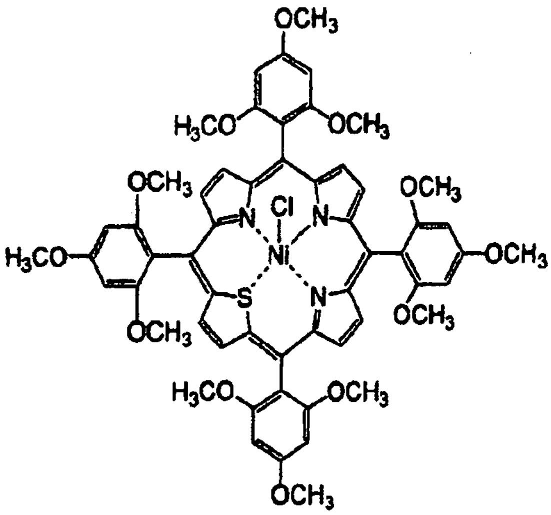

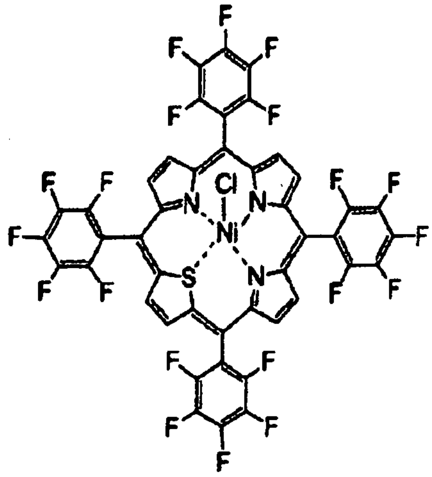

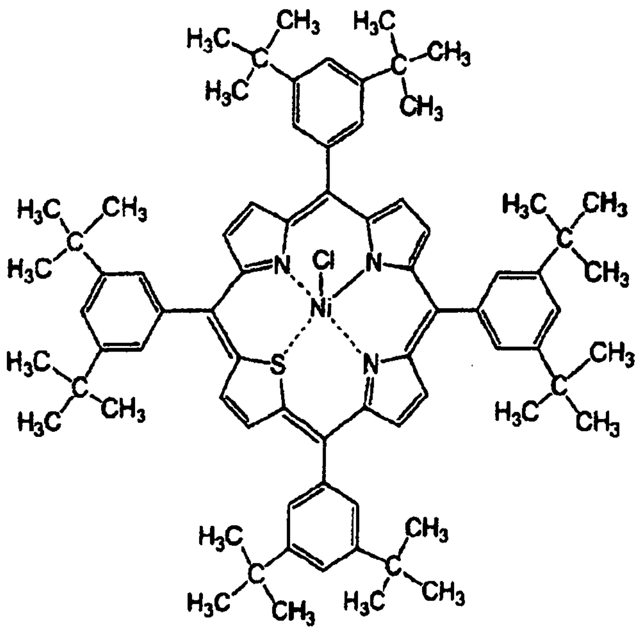

Further, the metal complex represented by the above formula (1) or (2) may be fixed on e.g. a carrier. A schematic view of such a fixed metal complex is shown below. In the following schematic view of reaction, the metal complex represented by the above formula (1) is described as an example of the metal complex, but the metal complex may be the metal complex represented by the above formula (2).

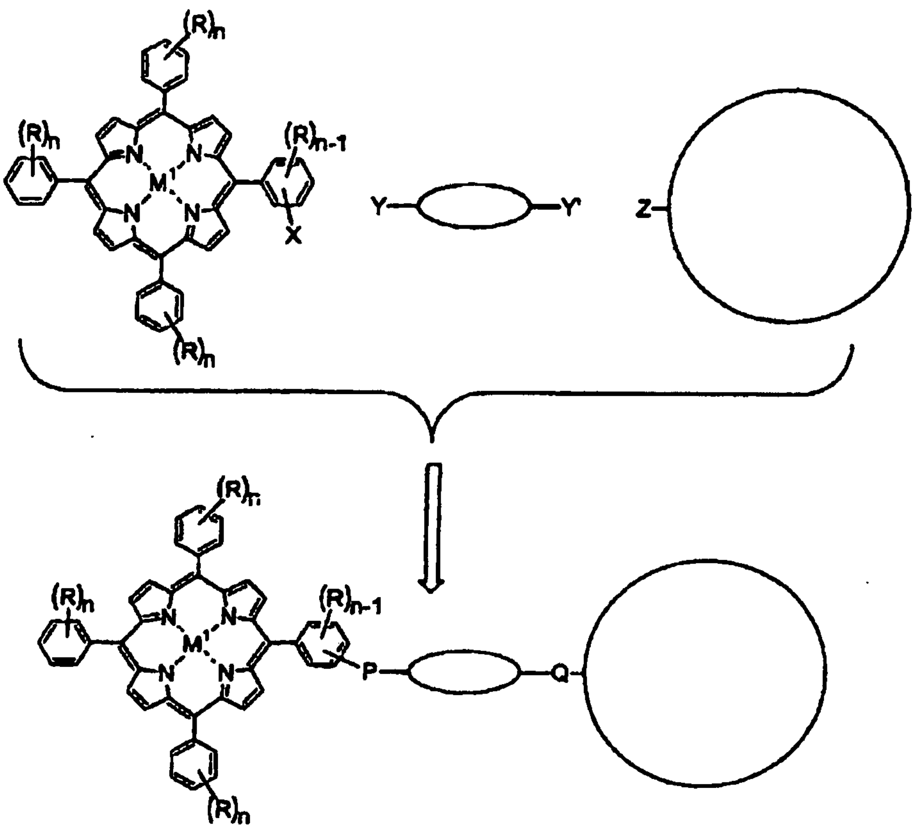

In the above schematic view of reaction, $M^1$, R and n has the same meanings as $M^1$, R and n in the above formula (1).

Further, in the above schematic view of reaction, the portion shown by a circle represents a fixing substrate (carrier), which may, for example, be particles made of an organic or inorganic polymer such as insoluble polystyrene

beads or silica gel, glass, mica or metal. In the above schematic view of reaction, the fixing substrate (carrier) is represented by a circle, but its shape is not particularly limited and may, for example, be spherical or in a flat plate form.

In the above schematic view of reaction, the ellipse represents a linker moiety, which may, for example, be a hydrocarbon chain, a polyether chain, a polyester chain, a polyamide chain or a polysilyl ether chain.

In the above schematic view of reaction, P and Q represent bond groups (bond points). P is a bond group (bond point) formed by bonding of X and Y, and Q is a bond group (bond point) formed by bonding of Z and Y'. Each of P and Q which are independent of each other, may, for example, be an alkyl group, an ether group, an ester group, an amide group, a carbamate group or a silyl ether group.

Z on the fixing substrate, Y and Y' of the linker moiety and X on the metal complex may only be required to be functional groups capable of forming the bond groups (bond points) of the above P and Q, and each of them may for example, be a halogen atom, a hydroxy group, a carboxyl group, an amino group, an isocyanate group, a trialkoxysilyl group or a trihalosilyl group.

The number and substitution positions of X in the metal complex are not particularly limited. However, preferred is a case where at least one X is substituted on each of four phenyl groups, and further preferred is a case where one or two X are substituted on each of four phenyl groups.

The total number and density of Z on the fixing substrate are not particularly limited. Further, a plurality of Z on the fixing substrate are present randomly or regularly. The number of Z depends on the number of the metal complex to be fixed.

In a case where the metal complex represented by the above formula (1) or (2) is used as the polymerization catalyst (C), any one type may be used alone, or two or more types may be used in combination. It is preferred to use a single type from such a viewpoint that it is thereby easy to adjust the solvent, catalyst concentration, Lewis base, temperature and pressure to be suitable for the reaction. Otherwise, a metal complex represented by the formula (1) or (2) and a polymerization catalyst (C) other than the metal complex may be used in combination as the polymerization catalyst (C). However, as the polymerization catalyst (C), it is preferred to employ only a metal complex represented by the formula (1) or (2).

[LEWIS BASE]

In a case where a metal complex represented by the above formula (1) or (2) is used as the polymerization catalyst (C), a Lewis base is preferably permitted to be coexistent with the metal complex. It is considered that the Lewis base will be coordinated to the metal portion of the metal complex, whereby the function as the catalyst will be improved.

The Lewis base is preferably a compound having a high electron-shearing structure and having an unpaired electron, so that it can easily be coordinated to the metal portion of the metal complex.

In a case where a metal complex represented by the above formula (1) is employed as the polymerization catalyst (C), it is preferred to use a promoter of an amine type compound (hereinafter referred to as an amine type promoter) such as a pyridine type compound or an imidazole type compound, as the Lewis base. On the other hand, in a case where a metal complex represented by the above formula (2) is used as the polymerization catalyst (C), it is preferred to use a triphenylphosphine as the Lewis base.

The pyridine type compound as the Lewis base is not particularly limited, but is preferably a compound represented by the following formula (3).

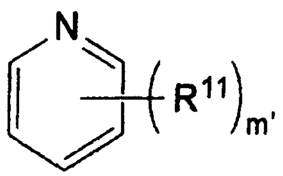

...(3)

In the formula (3), $R^{11}$ represents a substituted or unsubstituted methyl group, a formyl group or a substituted amino group, more preferably a dimethylamino group, a methyl group or a formyl group, further preferably a dimethylamino group.

The substitution position of $R^{11}$ is preferably a 4- or 3- position, more preferably a 4- position.

m' represents an integer of from 0 to 5, preferably an integer of 0 or 1.

A preferred specific example of the pyridine type compound may be pyridine, 4-methylpyridine, 4-formylpyridine or 4-(N,N-dimethylamino)pyridine, more preferably pyridine, 4-methylpyridine or 4-(N,N-dimethylamino)pyridine, particularly preferably 4-(N,N-dimethylamino)pyridine (DMAP).

In a case where a compound represented by the above formula (3) is used as the Lewis base, it may be a fixed Lewis base. The fixing may be carried out in the same manner as the fixing of the above-mentioned metal complex. The

fixed metal complex and the fixed Lewis base may be used in combination.

The imidazole type compound as the Lewis base is not particularly limited, but is preferably a compound represented by the following formula (4).

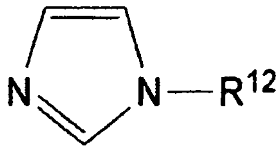

...(4)

In the formula (4), $R^{12}$ represents a substituted or unsubstituted alkyl group, such as a methyl group, an ethyl group or a propyl group. It is more preferably a methyl group. That is, a particularly preferred compound of the formula (4) is N-methylimidazole.

The amount of the Lewis base to be used is preferably from 0.1 to 5 mol per mol of the metal complex as the polymerization catalyst (C). Within such a range, the alternate copolymer chain can easily be formed without lowering the yield, while suppressing formation of a cyclic carbonate (a compound having one mol each of the epoxide and carbon dioxide reacted). Further, such is preferred from the viewpoint of the reaction rate and in that carbon dioxide can easily be taken in so that an ether bond having only the epoxide reacted can hardly be formed.

<PROCESS FOR PRODUCING HYDROXY COMPOUND>

The hydroxy compound (I) of the present invention is produced by a process which comprises copolymerizing an initiator composed of a polycarbonate (b), a monoepoxide (a) and carbon dioxide, in the presence of a polymerization catalyst (C).

As the polymerization catalyst (C), it is particularly preferred to employ the metal complex represented by the above formula (1). The amount of the metal complex to be added may sufficiently be from 0.01 to 10 mol% to the polycarbonate (b) to be used as the initiator. It is more preferably from 0.1 to 5 mol%.

The pressure during the reaction is preferably from 2 to 26 MPa, although the reaction may proceed even under a pressure of from 0.1 to 2 MPa.

The partial pressure of carbon dioxide is preferably from 0.1 to 25 MPa, more preferably from 2 to 25 MPa, although the reaction may proceed even when the partial pressure is from 0.1 to 2 MPa. The partial pressure of carbon dioxide may be adjusted by filling carbon dioxide only, or may be adjusted so that the partial pressure of carbon dioxide will be within the above range in the coexistence with nitrogen. The latter is preferred. In a case where carbon dioxide and nitrogen are permitted to coexist, it is preferred to adjust so that nitrogen be 1 atm, the rest being carbon dioxide pressure.

Here, under a pressure of at least 7.38 MPa, carbon dioxide will be in a supercritical state, and even in such a supercritical state, the reaction can be carried out. In the case of supercritical carbon dioxide, the copolymerization reaction can be carried out even without using the after-mentioned solvent for the reaction.

The reaction is carried out at a temperature of at most 60°C, preferably from 20 to 60°C, more preferably from 25 to 50°C.

The copolymerization reaction may be carried out in a solvent or in the absence of a solvent. The solvent may, for example, be an aromatic hydrocarbon such as benzene or toluene; a halogenated hydrocarbon such as dichloromethane or chloroform; or an ether such as tetrahydrofuran. They may be used alone or in combination as a mixture of two or more of them. A preferred example of the solvent is dichloromethane, toluene, dimethylformamide or tetrahydrofuran. More preferred is dichloromethane, dimethylformamide or tetrahydrofuran, and further preferred is dichloromethane or tetrahydrofuran.

The copolymerization reaction is preferably carried out by using dichloromethane as the solvent or without using any solvent. It is more preferred to carry out the reaction without using any solvent, since it is thereby possible to omit a step of post treatment for removal of the solvent for the reaction, or an unnecessary solvent will not remain in the copolymer.

The order for addition of the polycarbonate (b), the monoepoxide (a), carbon dioxide, the polymerization catalyst (C), the Lewis base and the solvent, is not particularly limited. However, in a case where a solvent is to be used, it is preferred to preliminarily prepare a solution having the metal complex dissolved in the solvent.

To terminate the reaction, it is preferred to add a Bronsted acid compound, whereby terminals will be converted to hydroxy groups. As such a Bronsted acid compound, nitric acid, sulfuric acid or hydrochloric acid is preferred. In consideration of the solubility of the polymer, it is preferred to add such a Bronsted acid compound in such a state as dissolved in an alcohol solvent such as methanol or ethanol. In consideration of post treatment, more preferred is a methanol solution of hydrochloric acid.

After the completion of the copolymerization reaction, the metal complex taken into the copolymer may be removed by either a method of precipitating only one from the solution in which the metal complex and the copolymer are dissolved, or a method of extracting only one from a solid state mixture of the metal complex and the copolymer.
In such a case, it is possible to use either a poor solvent for the copolymer, which is capable of dissolving the metal complex, a poor solvent for the metal complex, which is capable of dissolving the copolymer, or an acidic substance capable of reacting with the basic portion of the metal complex to form a salt. For example, as such a poor solvent, methanol or hexane may be employed.

[HYDROXY COMPOUND (I)]

Thus, using hydroxy groups at the molecular terminals of the polycarbonate (b) as initiation points, a copolymer chain (Ap) of the alkylene oxide and carbon dioxide is grown to obtain a poly(mono)ol.
In the above formula (I), B is a m-valent residue produced by removing all hydroxy groups from the polycarbonate (b). In a case where a polycarbonate monool is used as the component (b), m is 1. In a case where a polycarbonate diol is used, m is 2, and as a polyol represented by the above formula (I), a diol having a block copolymer structure represented by A-B-A is obtainable. A plurality of A bonded to B may be the same or different from one another.
A represents a univalent group which comprises a terminal hydroxy group and a copolymer chain (Ap) containing a carbonate chain wherein an ether unit (first constituting unit) produced by ring-opening of a monoepoxide and a carbonyloxy unit [-OC(O)-] (second constituting unit) are linked to each other. The copolymer chain (Ap) may further have an ether unit produced by ring-opening of a monoepoxide, which is not linked to a carbonyloxy unit. The first constituting unit is a constituting unit derived from a monoepoxide (a), and the second constituting unit is a constituting unit derived from carbon dioxide.
By copolymerizing the component (b), the monoepoxide (a) and carbon dioxide in the presence of the polymerization catalyst (C), the alternate copolymer chain of the monoepoxide (a) and carbon dioxide will be formed. That is, the copolymer chain (Ap) contains an alternate copolymer chain of the first constituting unit and the second constituting unit.
In the poly(mono)ol (I), the number average molecular weight (Mn) of the residue B is preferably from 300 to 5,000. If it is less than 300, no adequate elongation will be obtainable, and if it exceeds 5,000, the strength tends to be low, and at the same time, the viscosity tends to be high, whereby the operation efficiency tends to deteriorate. A preferred range of such Mn is from 500 to 3,000.
In a case where one univalent group A bonded to B is counted as one molecule, the number average molecular weight (Mn) of the univalent group A is preferably from 100 to 5,000. When it is at least 100, the elongation will be improved, and if exceeds 5,000, the viscosity tends to increase, whereby the operation efficiency tends to deteriorate. A preferred range of such Mn is from 200 to 3,000. Mn of such univalent group A is a value obtained by (final molecular weight Mn - raw material molecular weight MnB)/number of functional groups (number of OH terminals per one molecule). Further, Mn of such univalent group A can be adjusted by the ratio of the mass of the initial raw material B to the mass of the monomer raw materials and by control of the reaction rate.
The number average molecular weight (Mn) of the entire poly(mono)ol (I) is preferably from 500 to 15,000. When it is at least 500, improvement in the elongation property will be observed, and when it is at most 15,000, the operation efficiency at the time of the preparation of an urethane resin will be improved, and at the same time, many urethane bonds can be introduced, whereby improvement in strength or improvement in adhesion to a substrate can be expected. The range of such Mn is more preferably from 700 to 12,000, particularly preferably from 1,000 to 5,000.
In the poly(mono)ol (I), the ratio ($B/A_m$) of the mass of residue B to the mass of m univalent groups $A_m$ (sum of masses of the respective univalent groups A) is preferably from 1/9 to 9/1. In the present invention, the mass of residue B can be calculated by a method of removing the mass of hydroxy groups based on the charged molar amount, from the charged mass of the component (b). The mass of m univalent groups $A_m$ can be obtained by measuring the increase in mass between before and after copolymerizing the compound (a) and carbon dioxide in the reaction step.
In such a mass ratio ($B/A_m$), when the sum of the mass of residue B and the mass of univalent groups $A_m$ is 10, if the proportion occupied by the mass of residue B is at least 1, the flexibility will be improved, and if it is at most 9, the strength will be improved. The range of such a mass ratio ($B/A_m$) is more preferably from 2/8 to 8/2, particularly preferably from 3/7 to 7/3.
In the copolymer chain (Ap) of the univalent group A, in a case where the first constituting unit (A1) based on the compound (a) and the second constituting unit (A2) based on carbon dioxide are completely alternately linked to each other, the poly(mono)ol (I) has a complete block copolymer structure of the residue B and the univalent group A, as represented by e.g. A-B-A. In such a block copolymer structure, the residue B derived from the component (b) is different in the glass transition temperature (Tg) from the univalent group A formed by copolymerization reaction of the compound (a) with carbon dioxide. It is considered that the differency of Tg between two moieties (A and B) of such block alignment of copolymer contributes to the excellent elongation property of (for example) the polyurethane compounded from the poly(mono)ol (I).

Accordingly, it is most preferred that the univalent group A is an alternate copolymer chain wherein the first constituting unit (A1) and the second constituting unit (A2) are completely alternately arranged. However, inclusion of a non-alternate moiety is permissible to such an extent not to substantially change Tg of the univalent group A. Here, the non-alternate moiety is specifically an ether unit (A3) which is an ether unit produced by a ring-opening of a monoepoxide and not linked to a carbonyloxy unit. The molar ratio of the carbonate group [-OC(O)-O-] to the ether group not linked to a carbonyloxy unit, present in the m univalent groups $A_m$ (total univalent groups $A_m$) is preferably from 7/3 to 10/0.

The carbonate group [-OC(O)-O-] is a bond moiety formed by alternate copolymerization of carbon dioxide and the monoepoxide (a). The above-mentioned unit (A3) i.e. the ether group not linked to a carbonyloxy unit, is a bond moiety formed by a polymerization reaction of the monoepoxide (a) itself.

When a metal complex represented by the above formula (1) or (2) is used as the polymerization catalyst (C), it is possible to obtain a poly(mono)ol (I) wherein when the sum of the above carbonate group and the ether group not linked to a carbonyloxy unit is 10, the proportion of the ether group is at most 3, preferably at most 2.

Further, the glass transition temperature (Tg) of the component (b) is preferably at most -20°C. One having such a Tg exceeding -20°C is hardly available from commercial products and is not preferred since it is poor in flexibility.

Further, Tg of a copolymer obtainable by copolymerizing a compound (a) and carbon dioxide in the presence of a polymerization catalyst (C) under the same conditions as the conditions for the production of the poly(mono)ol (I) except that the same molar amount of water is used instead of the component (b) (hereinafter referred to as "Tg of the univalent group A alone" is preferably at least 10°C. One having such a Tg being lower than 10°C can hardly be produced.

The poly(mono)ol (I) has a plurality of Tg as shown in Examples given hereinafter. The presence of such a plurality of Tg indicates that the residue B and the univalent group A being different in Tg from each other, form a block copolymer structure. Each of the plurality of Tg of the poly(mono)ol (I) is higher than Tg of the component (b) and lower than Tg of the above univalent group A alone.

The poly(mono)ol (I) undergoes an urethane-forming reaction with a compound having an isocyanate group, and by utilizing such a nature, it is possible to produce a resin. Further, by introducing energy ray excitation type curable moieties, it is possible to construct a coating material or molding material curable by energy rays such as visible light rays, ultraviolet rays, or electron rays.

<PREPOLYMER (P)>

The prepolymer (P) of the present invention can be obtained by reacting the poly(mono)ol (I) with a polyisocyanate compound (D).

The poly(mono)ol (I) to be used for the production of the prepolymer (P) may be a polyol only or a mixture of a polyol and a monool. The content of the monool in such a mixture is preferably at most 10 mass%, more preferably at most 3 mass%, from the viewpoint of the physical properties of the resin to be obtained.

[POLYISOCYANATE COMPOUND (D)]

The polyisocyanate compound (D) may, for example, be an aromatic polyisocyanate, an aliphatic polyisocyanate or an alicyclic polyisocyanate.

From the viewpoint of the elongation property, a diisocyanate compound having two isocyanate groups is preferred. Specifically, 4,4'-diphenylmethane diisocyanate, p-phenylene diisocyanate, tolylene diisocyanate, 1,5-naphthylene diisocyanate, xylylene diisocyanate, hexamethylene diisocyanate, isophorone diisocyanate or 4,4'-dicyclohexylmethane diisocyanate may, for example, be mentioned. Preferred is 4,4'-diphenylmethane diisocyanate.

Such polyisocyanate compounds (D) may be used alone or in combination as a mixture of two or more of them.

The reaction to form the prepolymer is carried out in a state where the isocyanate group is excessive to the hydroxy group, to obtain a prepolymer (P) having an isocyanate group at the terminal. Specifically, with respect to the ratio of the polyisocyanate compound (D) to the poly(mono)ol (I) to be used for the reaction, the isocyanate group/hydroxy group (molar ratio) is preferably from 1.1/1 to 8/1, more preferably from 1.2/1 to 5/1. When the isocyanate group is at least 1.1 mol per one mol of the hydroxy group, gelation tends to scarcely occur, the viscosity will not be high, and a molecular weight suitable as a prepolymer to be used for the production of a polyurethane can easily be obtained. On the other hand, when the isocyanate group is at most 8 mol per one mol of the hydroxy group, the polyisocyanate compound (D) in the obtainable prepolymer will not be too much, and the viscosity will not be too low, whereby the handling efficiency will be good.

The reaction of the poly(mono)ol (I) with the polyisocyanate compound (D) can be carried out by using a known method for producing the prepolymer having a terminal isocyanate group. A known catalyst for urethane-forming reaction such as dibutyltin dilaurate may suitably be employed. Further, a solvent such as N,N-dimethylacetamide, dimethylformamide, dimethylsufoxide, methyl ethyl ketone, cyclohexanone, ethyl acetate, toluene or xylene, may, for example, be

used. Such solvents may be used alone or in combination as a mixture of two or more of them.

<POLYURETHANE>

The polyurethane of the present invention can be obtained by reacting the above prepolymer (P) with a chain extender (E).

[CHAIN EXTENDER (E)]

As the chain extender (E), various known ones having at least two hydrogen atoms reactive with isocyanate groups may be used. For example, a diol such as ethylene glycol, 1,4-butanediol, propylene glycol, 1,6-hexanediol, 3-methyl-1,5-pentanediol, 1,4-bis(2-hydroxyethoxy)benzene, 1,4-cyclohexanediol, bis-(β-hydroxyethyl)terephthalate or xylylene glycol, may be mentioned. Such chain extenders may be used alone or in combination as a mixture of two or more of them. Among them, 1,4-butanediol and/or 1,4-bis(2-hydroxyethoxy)benzene is preferred.

The amount of the chain extender (E) to be used, may vary depending upon the content of the isocyanate group in the prepolymer (P) but is preferably such that the molar ratio "isocyanate group/hydrogen atom (molar ratio)" of isocyanate groups to hydrogen atoms reactive with isocyanate groups present in the chain extender (E) becomes from 0.8/1 to 1.2/1, more preferably from 0.9/1 to 1.1/1. When the isocyanate group/hydrogen atom (molar ratio) is at least the lower limit of the above range, rapid increase of viscosity and gelation during the chain extending reaction can easily be prevented. On the other hand, if the molar ratio is at most the upper limit value of the above range, the chain extending reaction will sufficiently proceed, whereby it becomes possible to easily obtain the desired molecular weight.

The reaction of the prepolymer (P) with the chain extender (E) can be carried out by using a known method for chain extending reaction.

The mass average molecular weight (Mw) of the polyurethane thus obtained is preferably at least 20,000, more preferably at least 40,000, in that a good elongation property can thereby be obtained. The upper limit is preferably 300,000, more preferably 200,000, from the viewpoint of the molding processability of the polyurethane.

The polyurethane obtained by using the poly(mono)ol (I) of the present invention may, for example, be dissolved in a solvent to form a resin solution, which is applied and dried on a substrate to obtain a coating layer or film excellent in the elongation property. Accordingly, it is useful, for example, for an application where elasticity, flexibility or shape following property is required, such as an elastic coating material to be applied to synthetic leather, or an elastic film. Further, it is useful also as a material for synthetic leather.

EXAMPLES

Now, the present invention will be described in detail with reference to Examples. However, it should be understood that the present invention is by no means limited to such Examples.

In the following, the respective physical properties were measured by the following methods.

·Hydroxyl value (OH value, unit: mgKOH/g): analyzed in accordance with JIS-K1557 and calculated by the following formula. In the formula, S represents the amount (g) of the sample, A represents the amount (mL) of a 0.5 N potassium hydroxide solution required for the titration of the sample, B is the amount (mL) of a 0.5 N potassium hydroxide solution required for a blank test, and f represents a factor of the 0.5 N potassium hydroxide solution.

$$\text{OH value (mgKOH/g)} = 28.05(B-A)f/S$$

· Hydroxyl value-based molecular weight (Mn*): calculated from the hydroxyl value by the following formula. In the formula, F is the number of hydroxy groups (2 in the case of a diol).

$$Mn^* = 56{,}100 \times F/\text{OH value}$$

·Glass transition temperature (Tg, unit:°C ): measured by using a differential scanning calorimeter (product name: DSC, manufactured by SII Nano Technology Inc.) in a nitrogen gas atmosphere under a condition of raising the temperature from -100°C to 120°C at a temperature-raising speed of 10°C/min.

(PREPARATION EXAMPLE 1: PREPARATION OF DIOL (I-1))

As an initiator (component (b)), commercially available polycarbonate diol (product name: Kuraray Polyol C2090, manufactured by Kuraray Co., Ltd., hydroxyl value: 56.1 mgKOH/g, Mw: 5,373, Mn: 1,974, Mw/Mn: 2.72) was used. This polycarbonate diol is a high molecular weight diol which comprises a terminal hydroxy group and a random copolymer comprising about 90 mol% of a constituting unit produced by removing two hydroxy groups from a carbonate group and 3-methylpentanediol, and about 10 mol% of a constituting unit produced by likewise removing two hydroxy groups from a carbonate group and 1,6-hexanediol.

Firstly, 50 mmol of the initiator, 0.5 mmol of tetraphenylporphynate cobalt chloride [(TPP)CoCl] (a metal complex represented by the above formula (1-1)) and 0.375 mmol of 4-(N,N-dimethylamino)pyridine (DMAP) were charged into a 500 mL polymerization reactor, and after hermetically closing the reactor, the mass (G1) of the reactor was measured down to the 0.1 g unit. Further, with stirring at room temperature at a rotational speed of 100 rpm, substitution by nitrogen was carried out by the following operation. Pressurizing at 0.5 MPa and depressurizing at 0.01 MPa were repeated three times.

Then, at 0.01 MPa, 2,000 mmol of propylene oxide was added. The mass (G2) of the reactor was measured down to the 0.1 g unit in this state.

The reactor was put in an oil bath and heated to 40°C, and then carbon dioxide gas ($CO_2$) was introduced from a liquefied carbon dioxide gas cylinder, and the internal pressure of the polymerization reactor was adjusted to be 3 MPa, whereupon a reaction was carried out for 24 hours in a state where the temperature was maintained at 40°C.

Then, carbon dioxide gas and propylene oxide were removed under reduced pressure. The mass (G3) of the reactor at that time was measured. The reaction product in the reactor was in a liquid form.

Then, the pressure in the reactor was adjusted to 0.2 MPa, and 50 g of a methanol solution of hydrochloric acid (hydrochloric acid concentration: 8 mass%) and 100 mL of tetrahydrofuran (THF) were added under pressure, followed by stirring at 40°C for 10 minutes, whereupon the reaction was terminated, and then, the reactor was opened.

A THF solution of the reaction product thus obtained was dried by an evaporator to obtain 181.17 g of a dried product of a diol (I-1).

The obtained diol (I-1) was analyzed by GPC, whereby Mw was 6,175, Mn was 4,257, and Mw/Mn was 1.451. Further, the number average molecular weight of the univalent group A was 1,151. Here, the number average molecular weight of the univalent group A was obtained by dividing the difference between the number average molecular weight of the initiator and the number average molecular weight of the obtained diol, by the number of functional groups (2 in the case of the diol (I-1)).

Further, from an analysis by $^1$H-NMR, it was found that other than the moiety (residue B) derived from the initiator were a terminal hydroxy group (univalent group A) and a copolymer chain of carbon dioxide and propylene oxide.

Further, from a detailed measurement by $^1$H-NMR, it was found that the molar ratio of the carbonate group present in all univalent groups $A_m$ to the ether group not linked to a carbonyloxy unit was 99/1.

Further, based on the mass of the initiator charged and the results of the measuring the mass of the reactor carried out during the production process, the mass ratio ($B/A_m$) of the mass of the moiety (B) derived from the initiator to the mass of the entire copolymer chain ($A_m$) obtainable by deducting the above value G1 from the value G3, was calculated and found to be 55/45.

Further, cleaning by means of THF and methanol was carried out eight times to the diol (I-1) to remove the catalyst and to obtain a purified diol (I-1) (referred to as the cleaned product (I-1), and the same applies hereinafter). Tg of the obtained cleaned product (I-1) was measured and found to be 4.9°C and -28.1°C. This indicates that the diol (I-1) is a block copolymer having A-B-A structure. Further, the hydroxyl value of the cleaned product (I-1) was 29.8 mgKOH/g.

(PREPARATION EXAMPLE 2: PREPARATION OF DIOL (I-2))

As an initiator (component (b)), commercially available polycarbonate diol (product name: Nipporan 981, manufactured by Nippon Polyurethane Industry Co., Ltd., hydroxyl value: 86.5 mgKOH/g, Mw: 3,118, Mn: 1,467, Mw/Mn: 2.13) was used. This polycarbonate diol is a high molecular weight diol which comprises a terminal hydroxy group and a polymer comprising about 100 mol% of a constituting unit produced by removing two hydroxy groups from a carbonate group and 1,6-hexandiol.

Firstly, 100 mmol of the initiator, 1.0 mmol of tetraphenylporphynate cobalt chloride [(TPP)CoCl] (a metal complex represented by the above formula (1-1)) and 0.75 mmol of 4-(N,N-dimethylamino)pyridine (DMAP) were charged into a 500 mL polymerization reactor, and after hermetically closing the reactor, the mass (G1) of the reactor was measured down to the 0.1 g unit. Further, with stirring at room temperature at a rotational speed of 100 rpm, substitution by nitrogen was carried out by the following operation. Pressurizing at 0.5 MPa and depressurizing at 0.01 MPa were repeated three times.

Then, at 0.01 MPa, 2,000 mmol of propylene oxide was added. The mass (G2) of the reactor was measured

down to the 0.1 g unit in this state.

This reactor was put in an oil bath and heated to 40°C, and then, carbon dioxide gas ($CO_2$) was introduced from a liquefied carbon dioxide gas cylinder, so that the internal pressure of the polymerization reactor was adjusted to be 3 MPa, and the reaction was carried out for 24 hours in a state where the temperature was maintained to be 40°C.

Then, carbon dioxide gas and propylene oxide were removed under reduced pressure. The mass (G3) of the reactor at that time was measured. The reaction product in the reactor was in a liquid form.

Then, the pressure in the reactor was adjusted to be 0.2 MPa, and 50 g of a methanol solution of hydrochloric acid (hydrochloric acid concentration: 8 mass%) and 100 mL of tetrahydrofuran (THF) were added under pressure, followed by stirring at 40°C for 10 minutes, whereupon the reaction was terminated and then, the reactor was opened.

A THF solution of the reaction product thus obtained was dried by an evaporator to obtain 185.25 g of a dried product of a diol (I-2).

The obtained diol (I-2) was analyzed by GPC, whereby Mw was 4,163, Mn was 2,036, and Mn/Mw was 2.045. Further, the number average molecular weight of the univalent group A was 285.

Further, from an analysis by $^1$H-NMR, it was found that other than the moiety (residue B) derived from the initiator were a terminal hydroxy group (univalent group A) and a copolymer chain of carbon dioxide and propylene oxide.

Further, from a detailed measurement by $^1$H-NMR, it was found that the molar ratio of the carbonate present in all univalent groups $A_m$ to the ether group not linked to a carbonyloxy unit was 97/3.

Further, based on the mass of the initiator charged and the results of measuring the mass of the reactor carried out during the production process, the mass ratio ($B/A_m$) of the mass of the moiety (B) derived from the initiator and the mass of the copolymer chain ($A_m$) obtainable by deducting the above value G1 from the value G3, was calculated and found to be 54/46.

Further, cleaning to remove the catalyst was carried out to the diol (I-2) in the same manner as in Preparation Example 1 to obtain a cleaned product (I-2). The hydroxyl value of the cleaned product (I-2) was 61.5 mgKOH/g, and the hydroxyl value-based molecular weight was 1,824.

(PREPARATION EXAMPLE 3: PREPARATION OF DIOL (I-3))

As an initiator (component (b)), commercially available polycarbonate diol (product name: Nipporan 980N, manufactured by Nippon Polyurethane Industry Co., Ltd., hydroxyl value: 55.8 mgKOH/g, Mw: 6,647, Mn: 2,544, Mw/Mn: 2.612) was used. This polycarbonate diol is a high molecular weight diol which comprises a terminal hydroxy group and a polymer comprising about 100 mol% of a constituting unit produced by removing two hydroxy groups from a carbonate group and 1,6-hexanediol.

Firstly, 50 mmol of the initiator, 0.5 mmol of tetraphenylporphynate cobalt chloride [(TPP)CoCl] (a metal complex represented by the above formula (1-1)) and 0.375 mmol of 4-(N,N-dimethylamino)pyridine (DMAP) were charged into a 500 mL polymerization reactor, and after hermetically closing the reactor, the mass (G1) of the reactor was measured down to the 0.1 g unit. Further, with stirring at room temperature at a rotational speed of 100 rpm, substitution by nitrogen was carried out by the following operation. Pressurizing at 0.5 MPa and depressurizing at 0.01 MPa were repeated three times.

Then, at 0.01 MPa, 2,000 mmol of propylene oxide was added. The mass (G2) of the reactor was measured down to the 0.1 g unit in this state.

The reactor was put into an oil bath and heated to 40°C, and then, carbon dioxide gas ($CO_2$) was introduced from a liquefied carbon dioxide gas cylinder, so that the internal pressure of the polymerization reactor was adjusted to be 3 MPa, and the reaction was carried out for 24 hours in a state where the temperature was maintained at 40°C.

Then, carbon dioxide gas and propylene oxide were removed under reduced pressure. The mass (G3) of the reactor at that time was measured. The reaction product in the reactor was in a liquid form.

Then, the pressure in the reactor was adjusted to 0.2 MPa, and 50 g a methanol solution of hydrochloric acid (hydrochloric acid concentration: 8 mass%) and 100 mL of tetrahydrofuran (THF) were added under pressure, followed by stirring at 40°C for 10 minutes, whereupon the reaction was terminated and then, the reactor was opened.

A THF solution of the reaction product thus obtained was dried by an evaporator to obtain 179.42 g of a dried product of a diol (I-3).

The obtained diol (I-3) was analyzed by GPC, whereby Mw was 7,764, Mn was 4,193, and Mw/Mn was 1.852. Further, the number average molecular weight of the univalent group A was 825.

Further, from an analysis by $^1$H-NMR, it was found that other than the moiety (residue B) derived from the initiator were a terminal hydroxy group (univalent group A) and a copolymer chain of carbon dioxide and propylene oxide.

Further, from a detailed measurement by $^1$H-NMR, it was found that the molar ratio of the carbonate group present in all univalent groups $A_m$ to the ether group not linked to a carbonyloxy unit was 97/3.

Further, based on the mass of the initiator charged and the results of measuring the mass of the reactor carried out during the production process, the mass ratio ($B/A_m$) of the mass of the moiety (B) derived from the initiator to the

mass of the entire copolymer chain ($A_m$) obtainable by deducting the above value G1 from the value G3, was calculated and found to be 56/44.

Further, cleaning to remove the catalyst was carried out to the diol (I-3) in the same manner as in Example 1 to obtain a cleaned product (I-3). The hydroxyl value of the cleaned product (I-3) was 31.2 mgKOH/g, and the hydroxy group-based molecular weight was 3,597.

(COMPARATIVE PREPARATION EXAMPLE 1: PREPARATION OF COMPARATIVE DIOL (1) HAVING THE INITIATOR CHANGED TO WATER)

Firstly, 20 mmol of water, 1 mmol of [(TPP)CoCl] and 0.75 mmol of DMAP were charged into a 500 mL polymerization reactor, and after hermetically closing the reactor, substitution by nitrogen was carried out with stirring at room temperature at a rotational speed of 100 RPM.

Then, water, propylene oxide and carbon dioxide were reacted in the same manner as in Preparation Example 1 except that the amount of propylene oxide introduced was changed to 1,000 mmol, and the reaction time was changed to 24 hours, and then, carbon dioxide gas and propylene oxide were removed under reduced pressure. Further, in the same manner as in Preparation Example 1, the mass (G1, G2, G3) of the reactor was measured. The reaction product in the reactor was in a paste form.

Then, in the same manner as in Preparation Example 1, the reaction was terminated, and then, the reactor was opened. A THF solution of the obtained reaction product was dried by an evaporator to obtain 94.91 g of a dried product of a comparative diol (1).

As a result of the analysis in the same manner as in Preparation Example 1, Mw of the comparative diol (1) was 4,625, Mn was 4,317, Mw/Mn was 1.071, the number average molecular weight of the univalent group A was 2,150 (provided that calculation was made on such a basis that the initiator was water (18)), the molar ratio (A2/A3) was 99/1, and the mass ratio ($B/A_m$) was 0/100 i.e. all being $A_m$.

Further, cleaning to remove the catalyst was carried out to the comparative diol (1) in the same manner as in Preparation Example 1 to obtain a cleaned product comparative diol (1) (Tg of the cleaned product comparative diol (1) was measured and found to be 15.0°C. Further, the hydroxyl value of the cleaned product comparative diol (1) was 28.7 mgKOH/g.

(COMPARATIVE PREPARATION EXAMPLE 2: PREPARATION OF COMPARATIVE DIOL (2) WHEREIN INITIATOR WAS POLYETHER)

As an initiator, commercially available bi-functional polypropylene glycol (product name: EXCENOL EL-2020, manufactured by Asahi Glass Company, Limited, hydroxyl value: 61.3 mgKOH/g, Mw: 2,267, Mn: 2,068, Mw/Mn: 1.096) was used.

Firstly, 50 mmol of the initiator, 0.5 mmol of tetraphenylporphynate cobalt chloride [(TPP)CoCl] (a metal complex represented by the above formula (1-1)) and 0.375 mmol of 4-(N,N-dimethylamino)pyridine (DMAP) were charged into a 500 mL polymerization reactor, and after hermetically closing the reactor, the mass (G1) of the reactor was measured down to the 0.1 g unit. Further, with stirring at room temperature at a rotational speed of 100 rpm, substitution by nitrogen was carried out by the following operation. Pressurizing at 0.5 MPa and depressurizing at 0.01 MPa were repeated three times.

Then, at 0.01 MPa, 2,000 mmol of propylene oxide was added. The mass (G2) of the reactor in this state was measured down to the 0.1 g unit.

This reactor was put into an oil bath and heated to 40°C, and then, carbon dioxide gas ($CO_2$) was introduced from an liquefied carbon dioxide gas cylinder, so that the internal pressure of the polymerization reactor was adjusted to be 3 MPa, and the reaction was carried out for 24 hours in a state where the temperature was maintained at 40°C.

Then, carbon dioxide gas and propylene oxide were removed under reduced pressure. The mass (G3) of the reactor at that time was measured. The reaction product in the reactor was in a liquid form.

Then, the pressure in the reactor was adjusted to be 0.2 MPa, and 50 g of a methanol solution of hydrochloric acid (hydrochloric acid concentration: 8 mass%) and 100 mL of tetrahydrofuran (THF) were added under pressure, followed by stirring at 40°C for 10 minutes, whereupon the reaction was terminated and then, the reactor was opened.

A THF solution of the reaction product thus obtained was dried by an evaporator to obtain 181.21 g of a dried product of a comparative diol (2).

The obtained comparative diol (2) was analyzed by GPC, whereby Mw was 6,121, Mn was 4,277 and Mw/Mn was 1.43. Further, the number average molecular weight of the univalent group A was 1,105.

Further, from an analysis by $^1$H-NMR, it was not possible to calculate an accurate ratio of the carbonate backbone to the ether backbone in the component A because of an influence of the ether backbone derived from the initiator.

Further, based on the mass of the initiator charged and the results of measuring the mass of the reactor carried

out during the production process, the mass ratio ($B/A_m$) of the mass of the moiety (B) derived from the initiator to the mass of the entire copolymer chain ($A_m$) obtainable by deducting the above value G1 from the value G3, was calculated and found to be 55/45.

Further, cleaning to remove the catalyst was carried out to the comparative diol (2) in the same manner as in Preparation Example 1 to obtain a cleaned product comparative diol (2). The hydroxyl value of the cleaned product comparative diol (2) was 31.2 mgKOH/g, and the hydroxyl value-based molecular weight was 3,591.

(EXAMPLES 1 TO 3 AND COMPARATIVE EXAMPLES 1 TO 7: PRODUCTION OF PREPOLYMER AND POLYURETHANE)

Using the following polyol, the polyol was reacted with a polyisocyanate compound in the presence of an urethane-forming catalyst to obtain a prepolymer, and the prepolymer was further reacted with a chain extender to obtain a polyurethane. In Table 1, the physical properties of the polyol used in each Example are shown.

[POLYOLS USED]

- Example 1: A dehydrated ethyl acetate solution of the diol (I-1) obtained in Preparation Example 1 (solid content concentration: 50.3 mass%)
- Example 2: The diol (I-2) obtained in Preparation Example 2
- Example 3: The diol (I-3) obtained in Preparation Example 3
- Comparative Example 1: An ethyl acetate solution of the comparative diol (1) obtained in Comparative Preparation Example 1 (solid content concentration: 50 mass%), 5 mass% of the solid content is monool.
- Comparative Example 2: Commercial diol (1), a commercially available polycarbonate diol, product name: Kuraray Polyol C4090, manufactured by Kuraray Co., Ltd., solid content: 100%, it is composed of the same constituting unit as the following commercial diol (2), and it is different in the molecular weight from the commercial diol (2).
- Comparative Example 3: Commercial diol (2), a commercially available polycarbonate diol which was used as an initiator in Preparation Example 1, product name: Kuraray Polyol C2090, manufactured by Kuraray Co., Ltd., solid content: 100%.
- Comparative Example 4: Diol mixture, one obtained by mixing the comparative diol (1) and the commercial diol (2) in a solid content mass ratio of 1:1.
- Comparative Example 5: Commercial diol (3), a commercially available polycarbonate diol which was used as an initiator in Preparation Example 2, product name: Nipporan 981, manufactured by Nippon Polyurethane Industry Co., Ltd., it is composed of the same constituting unit as the following commercial diol (4), and it is different in the molecular weight from the commercial diol (4).
- Comparative Example 6: Commercial diol (4), a commercially available polycarbonate diol which was used as an initiator in Preparation Example 3, product name: Nipporan 980N, manufactured by Nippon Polyurethane Industry Co., Ltd.
- Comparative Example 7: Comparative diol (2) obtained in Comparative Preparation Example 2.

Blending was carried out at a molar ratio of the polyisocyanate compound : the polyol : the chain extender being 3:1:2.1. That is, the chain extender was excessive by 1.05 mol times.

Firstly, into a four-necked flask (300 mL) equipped with a stirrer, a reflux condenser, a nitrogen-introducing tube and a thermometer, diphenylmethane-4,4'-diisocyanate (hereinafter referred to as MDI, product name: Millionate MT, manufactured by Nippon Polyurethane Industry Co., Ltd.) was charged as the polyisocyanate compound, followed by stirring. The polyol was added under stirring, and then, a reaction was carried out while maintaining the temperature at 60°C. The reaction was carried out until the isocyanate group content (in accordance with JIS K7301) reached a prescribed value to obtain an isocyanate group-terminal prepolymer.

Then, a mixed liquid comprising 1,4-butanediol as the chain extender, dibutyltin dilaurate (DBTDL) as an urethane-forming catalyst, and N,N-dimethylacetoamide as an organic solvent, was added. The amount of the urethane-forming catalyst added was 0.01 part by mass per 100 parts by mass of the entire solid content charged amount. The amount of the organic solvent added was adjusted so that the solid content concentration became 40 mass%. After adding the mixed liquid, the reaction was carried out at a temperature of 80°C. The reaction was carried out until a peak attributable to an isocyanate group in IR disappeared to obtain a resin solution containing a polyurethane.

Mw and Mn of the polyurethane obtained in each Example are shown in Table 1.

[EVALUATION]

The resin solution containing the polyurethane obtained in each of Examples and Comparative Examples was used as it was, as a coating fluid. On a biaxially stretched polypropylene film (OPP film), a mold form having a height of 600 μm was provided, and the coating fluid was cast into the mold form and leveled by a glass rod so that the thickness would be uniform. It was dried at a temperature of 90°C for 3 hours to obtain a resin film.

The obtained resin film was cut into a shape of dumbbell No.3 by a dumbbell cutter and then peeled from the OPP film to obtain a sample for evaluation, and a tensile test was carried out.

The test was carried out by using Tensilon UTM-III-200 (product name) manufactured by Toyo Baldwin by a method of measuring the change in elongation at a marker line distance of 20 mm under such conditions that the temperature was 23°C, the relative humidity was 65%, the distance between chucks was 50 mm, and the tensile speed was 300 mm/min. The results of measurement of the breaking elongation (unit: %), the tensile modulus at 100% elongation (M100, unit: MPa) and the tensile strength (unit: MPa) are shown in Tables 1 and 2.

Further, evaluation of restoration property and heat resistance was also carried out. For the restoration property, in the above tensile test, a sample was elongated 100%, then removed from chucks and left to stand for 5 minutes, whereupon the distance between chucks, of the sample, was measured. One with an elongation of 50% or less was judged to be ○ (good), and one with an elongation remained to exceed 50% was judged to be x (no good). For the heat resistance, the above sample (film) was stored for 7 days in an oven set at 120°C, and after taking it out, its appearance was visually evaluated. One with a good appearance was judged to be ○, and one with the film shape not maintained was judged to be × (no good).

Further, in Comparative Example 1, data were fluctuated, and there were some which could not be elongated 100%. Accordingly, no measurement of the tensile modulus (M100) was carried out. <Number of n = 3>

TABLE 1

| | | Ex. 1 | Comp. Ex. 1 | Comp. Ex. 2 | Comp. Ex. 3 | Comp. Ex. 4 |
|---|---|---|---|---|---|---|
| Polyol | Type | Diol (I-1) C2090-PC | Comparative diol (1) $H_2O$-PC | Commercial diol (1) C4090 | Commercial diol (2) C2090 | Diol mixture $H_2O$-PC + C2090 |
| | Mw | 6,175 | 4,625 | 10,369 | 5,373 | - |
| | Mn | 4,257 | 4,317 | 2,734 | 1,974 | - |
| | Hydroxyl value (mgKOH/g) | 29.8 | 28.7 | 28.1 | 56.1 | 42.4 |
| | Tg (°C) | 4.9, -28.1 | 15.0 | -47.6 | -50.5 | - |

(continued)

| | | Ex. 1 | Comp. Ex. 1 | Comp. Ex. 2 | Comp. Ex. 3 | Comp. Ex. 4 |
|---|---|---|---|---|---|---|
| Polyurethane | Mw | 73,100 | 21,000 | 61,800 | 70,200 | 45,300 |
| | Mn | 7,500 | 8,100 | 14,800 | 10,500 | 8,800 |
| | Elongation (%) | 855 | 138 | 543 | 553 | 422 |
| | M100 (MPa) | 26 | - | 2.3 | 5.8 | 11.6 |
| | Tensile strength (MPa) | 9.4 | 3.7 | 4.6 | 36.4 | 29.1 |
| | Restoration property: after 100% elongation | ○ | - | ○ | ○ | ○ |
| | State of film after 7 days at 120°C | ○ | ○ | ○ | ○ | ○ |

As is evident from the results in Table 1, the polyurethane in Example 1 is distinctly superior in the elongation property to Comparative Examples 1 to 4. Further, the sample in each of Example 1 and Comparative Examples 2 to 4 showed a good restoration property. In Comparative Example 1, it was not possible to measure the restoration property, since the elongation property was poor. Further, the sample in each of Example 1 and Comparative Examples 1 to 4 showed good heat resistance.

TABLE 2

| | | Ex. 2 | Ex. 3 | Comp. Ex. 5 | Comp. Ex. 6 | Comp. Ex. 7 |
|---|---|---|---|---|---|---|
| Polyol | Type | Diol (I-2) 981-PC | Diol (I-3) 980N-PC | Commercial diol (3) 981 | Commercial diol (4) 980N | Comparative diol (2) PE-PC |
| | Mw | 4,163 | 7,764 | 3,118 | 6,644 | 6,121 |
| | Mn | 2,036 | 4,193 | 1,467 | 2,544 | 4,277 |
| | Hydroxyl value (mgKOH/g) | 61.5 | 31.2 | 113.5 | 55.8 | 31.2 |
| | Tg (°C) | - | - | - | - | - |
| Polyurethane | Mw | 43,600 | 72,000 | 40,700 | 53,100 | 68,900 |
| | Mn | 5,900 | 7,400 | 7,800 | 9,100 | 7,700 |
| | Elongation (%) | 632 | 842 | 403 | 513 | 922 |
| | M100 (MPa) | 4.9 | 2.7 | 8.2 | 6.0 | 2.1 |
| | Tensile strength (MPa) | 11.4 | 15.4 | 55.1 | 60.3 | 5.6 |
| | Restoration property: after 100% elongation | ○ | ○ | ○ | ○ | × |
| | State of film after 7 days at 120°C | ○ | ○ | ○ | ○ | × *1 |
| *1: Fluidized and the film could not be released. | | | | | | |

Examples 2 and 3 are likewise superior in the elongation property to Comparative Examples 5 and 6. They are slightly poor in the elongation property as compared with Comparative Example 7 wherein polypropylene glycol was used as the initiator component, but they were confirmed to be superior in the restoration property. Further, the film in Comparative Example 7 was confirmed to be poor in the stability of the film shape after being heated for 7 days at 120°C.

INDUSTRIAL APPLICABILITY

The hydroxy compound of the present invention is useful for the production of a polyurethane excellent in elongation property. Further, the polyurethane of the present invention can be suitably used for an application where elasticity, flexibility and shape-following property are required, e.g. as an elastic coating material to be applied to synthetic leather, an elastic film or a sealing material. Further, it is also suitable as a material for synthetic leather.

## Claims

1. A hydroxy compound represented by the following formula (I):

$$B\text{-}A_m \qquad (I)$$

wherein A and B represent the following groups, and m represents an integer of from 1 to 8;
A: a univalent group which has a terminal hydroxy group and a carbonate chain composed of an ether unit produced by ring-opening of a monoepoxide and a carbonyloxy unit [-OC(O)-] linked to each other;
B: a m-valent residue produced by removing all hydroxy groups from a polycarbonate having m hydroxy groups at the terminals, provided that -O-R- in the repeating unit [-OC(O)-O-R-] of the polycarbonate is an ether unit other than an ether unit produced by ring-opening of a monoepoxide.

2. The hydroxy compound according to Claim 1, wherein the number average molecular weight of the residue B is from 300 to 5,000; the number average molecular weight of the univalent group A is from 100 to 5,000; and the number average molecular weight of the entirety is from 500 to 15,000.

3. The hydroxy compound according to Claim 1 or 2, wherein the mass ratio ($B/A_m$) of the residue B to the m univalent groups A is from 1/9 to 9/1.

4. The hydroxy compound according to any one of Claims 1 to 3, wherein an ether group [-O-] not linked to the carbonyloxy unit may further be present in the m univalent groups A, and the molar ratio (carbonate group/ether group) of a carbonate group [-OC(O)-O-] to the ether group [-O-] not linked to the carbonyloxy unit is from 7/3 to 10/0.

5. The hydroxy compound according to any one of Claims 1 to 4, wherein R in the residue B is at least one bivalent group selected from the group consisting of an alkylene group composed of from 3 to 20 consecutive methylene groups (provided that the alkylene group may have a $C_{1-12}$ side chain), an alkylenearylene group and an arylene group.

6. The hydroxy compound according to any one of Claims 1 to 5, wherein in the univalent group A, the ether unit produced by ring-opening of a monoepoxide is an oxyalkylene group produced by ring-opening of a $C_{2-20}$ monoepoxide.

7. A process for producing a hydroxy compound, which comprises reacting a polycarbonate represented by the following formula (II) with a mixture of a monoepoxide and carbon dioxide in the presence of a polymerization catalyst (C) to produce a hydroxy compound represented by the following formula (I):

$$B\text{-}A_m \qquad (I)$$

$$B\text{-}(OH)_m \qquad (II)$$

wherein A and B represent the following groups, and m represents an integer of from 1 to 8;
A: a univalent group which has a terminal hydroxy group and a carbonate chain composed of an ether unit produced by ring-opening of a monoepoxide and a carbonyloxy unit [-OC(O)-] linked to each other;
B: a m-valent residue produced by removing all hydroxy groups from a polycarbonate having m hydroxy groups at the terminals, provided that -O-R- in the repeating unit [-OC(O)-O-R-] of the polycarbonate is an ether unit other than an ether unit produced by ring-opening of a monoepoxide.

8. The process for producing a hydroxy compound according to Claim 7, wherein the polymerization catalyst (C) is a porphyrin type metal coordination complex catalyst.

**9.** The process for producing a hydroxy compound according to Claim 8, wherein as the porphyrin type metal coordination complex catalyst, a porphyrin type metal coordination complex catalyst represented by the following formula (1) or (2) is used:

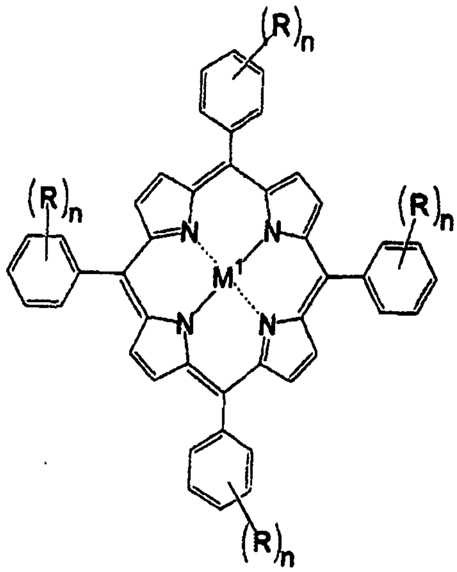

···(1)

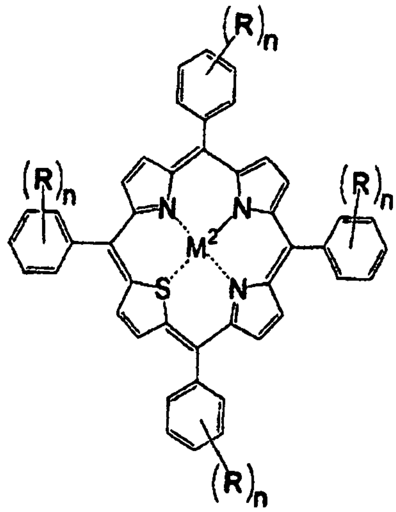

···(2)

wherein each R independently represents a methyl group, an ethyl group, a n-propyl group, an iso-propyl group, a n-butyl group, a sec-butyl group, an iso-butyl group, a tert-butyl group, a phenyl group, a methoxy group, an ethoxy group, a trifluoromethyl group, a fluorine atom, a chlorine atom or a bromine atom, n represents an integer of from 0 to 5, $M^1$ in the formula (1) represents a metal salt containing Co or Mn, and $M^2$ in the formula (2) represents a metal salt containing Ni.

**10.** The process for producing a hydroxy compound according to Claim 8 or 9, wherein an amine-type promoter is used in combination with the catalyst.

**11.** A prepolymer obtained by reacting a hydroxy compound as defined in any one of Claims 1 to 6 wherein m is at least 2, with a polyisocyanate compound (D).

**12.** A polyurethane obtained by reacting a prepolymer as defined in Claim 11 with a chain extender (E).

## Patentansprüche

**1.** Hydroxyverbindung der folgenden Formel (I):

$$B\text{-}A_m \qquad (I)$$

wobei A und B für die folgenden Gruppen stehen, und m für eine ganze Zahl von 1 bis 8 steht;
A: eine einwertige Gruppe, die eine terminale Hydroxygruppe aufweist
sowie eine Carbonatkette, die aus einer durch Ringöffnung eines Monoepoxids hergestellten Äthereinheit und einer Carbonyloxyeinheit [-OC(O)-], die miteinander verbunden sind, aufgebaut ist;
B: ein m-wertiger Rest, hergestellt durch Entfernen aller Hydroxygruppen
aus einem Polycarbonat mit m Hydroxygruppen an den terminalen Enden,
mit der Maßgabe, dass -O-R- in der Wiederholungseinheit [-OC(O)-O-R-] des Polycarbonats eine Äthereinheit ist, die von einer durch Ringöffnung eines Monoepoxids hergestellten Äthereinheit verschieden ist.

**2.** Die Hydroxyverbindung nach Anspruch 1, wobei das
Molekulargewichtszahlenmittel des Rests B von 300 bis 5000 beträgt; das Molekulargewichtszahlenmittel der einwertigen Gruppe A bei 100 bis 5000 liegt und das Molekulargewichtszahlenmittel der Gesamtheit bei 500 bis 15000 liegt.

3. Die Hydroxyverbindung nach Anspruch 1 oder 2, wobei das Gewichtsverhältnis ($B/A_m$) von Rest B zu den m einwertigen Gruppen A bei 1/9 zu 9/1 liegt.

4. Die Hydroxyverbindung nach einem der Ansprüche 1 bis 3, wobei eine Äthergruppe [-O-], die nicht an die Carbonyloxyeinheit gebunden ist, ferner in den m einwertigen Gruppen A vorliegen kann, und das Molverhältnis (Carbonatgruppe/Äthergruppe) einer Carbonatgruppe [-OC(O)-O-] zu der Äthergruppe [-O-], die nicht an die Carbonyloxyeinheit gebunden ist, bei 7/3 bis 10/0 liegt.

5. Die Hydroxyverbindung nach einem der Ansprüche 1 bis 4, wobei R in dem Rest B mindestens eine zweiwertige Gruppe ist, die ausgewählt wird aus der Gruppe, bestehend aus einer Alkylengruppe aus 3 bis 20 aufeinanderfolgenden Methylengruppen (mit der Maßgabe, dass die Alkylengruppe eine $C_{1-12}$ Seitenkette aufweisen kann), einer Alkylenarylengruppe und einer Arylengruppe.

6. Die Hydroxyverbindung nach einem der Ansprüche 1 bis 5, wobei in der einwertigen Gruppe A die Äthereinheit, die durch Ringöffnung eines Monoepoxids hergestellt wurde, eine Oxyalkylengruppe ist, die durch Ringöffnung eines $C_{2-20}$ Monoepoxids hergestellt wurde.

7. Verfahren zur Herstellung einer Hydroxyverbindung, das eine Umsetzung eines Polycarbonats der folgenden Formel (II) mit einem Gemisch aus einem Monoepoxid und Kohlendioxid in Gegenwart eines Polymerisationskatalysators (C) umfasst, um eine Hydroxyverbindung der folgenden Formel (I) zu schaffen:

$$B\text{-}A_m \qquad (I)$$

$$B\text{-}(OH)_m \qquad (II)$$

wobei A und B die folgenden Gruppen bedeuten, und m für eine ganze Zahl von 1 bis 8 steht;
A: eine einwertige Gruppe, die eine terminale Hydroxygruppe aufweist sowie eine Carbonatkette, die aus einer durch Ringöffnung eines Monoepoxids hergestellten Äthereinheit und einer Carbonyloxyeinheit [-OC(O)-], die miteinander verbunden sind, aufgebaut ist;
B: ein m-wertiger Rest, hergestellt durch Entfernen aller Hydroxygruppen aus einem Polycarbonat mit m Hydroxygruppen an den terminalen Enden, mit der Maßgabe, dass -O-R- in der Wiederholungseinheit [-OC(O)-O-R-] des Polycarbonats eine Äthereinheit ist, die von einer durch Ringöffnung eines Monoepoxids hergestellten Äthereinheit verschieden ist.

8. Das Verfahren zur Herstellung einer Hydroxyverbindung nach Anspruch 7, wobei der Polymerisationskatalysator (C) ein Metallkoordinationskomplex-Katalysator vom Porphyrin-Typ ist.

9. Das Verfahren zur Herstellung einer Hydroxygruppe nach Anspruch 8, wobei als Metallkoordinationskomplex-Katalysator vom Porphyrin-Typ ein Metallkoordinationskomplex-Katalysator vom Porphyrin-Typ der folgenden Formel (1) oder (2) verwendet wird:

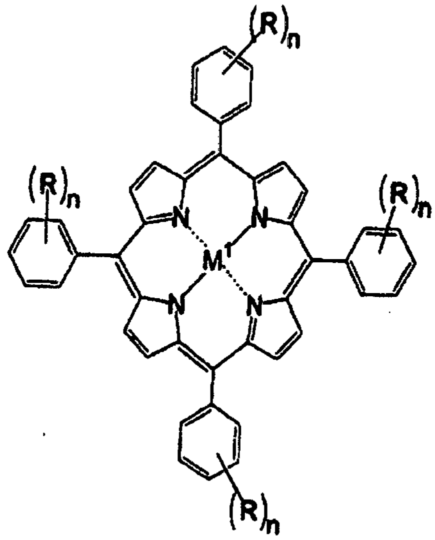

···(1)

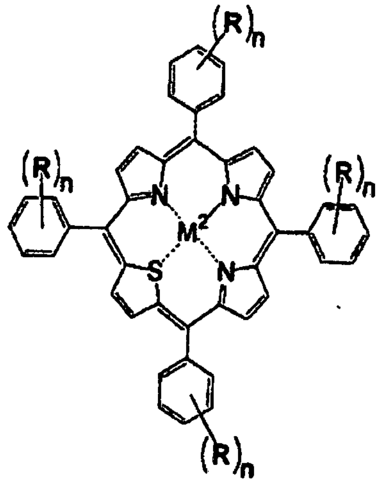

···(2)

wobei jedes R unabhängig für eine Methylgruppe, eine Ethylgruppe, eine n-Propylgruppe, eine iso-Propylgruppe, eine n-Butylgruppe, eine sec-Butylgruppe, eine iso-Butylgruppe, eine tert-Butylgruppe, eine Phenylgruppe, eine Methoxygruppe, eine Ethoxygruppe, eine Trifluormethylgruppe, ein Fluoratom, ein Chloratom oder ein Bromatom steht, n für eine ganze Zahl von 0 bis 5 steht, $M^1$ in der Formel (1) für ein Metallsalz steht, das Co oder Mn enthält und $M^2$ in der Formel (2) für ein Metallsalz, das Ni enthält, steht.

**10.** Das Verfahren zur Herstellung einer Hydroxyverbindung nach Anspruch 8 oder 9, wobei ein Promotor vom Amin-Typ in Kombination mit dem Katalysator verwendet wird.

**11.** Prepolymer, erhalten durch Umsetzung einer Hydroxyverbindung, wie sie in einem der Ansprüche 1 bis 6 definiert wird, wobei m mindestens 2 bedeutet, mit einer Polyisocyanatverbindung (D).

**12.** Polyurethan, erhalten durch Umsetzung eines Prepolymers nach Anspruch 11 mit einem Kettenverlängerer (E).

## Revendications

**1.** Composé hydroxy représenté par la formule (I) suivante :

$$B\text{-}A_m \qquad (I)$$

dans laquelle A et B représentent les groupes suivants, et m représente un entier de 1 à 8 ;
A : un groupe monovalent qui comporte un groupe hydroxy terminal et une chaîne carbonate composée d'un motif éther produit par ouverture de cycle d'un monoépoxyde et d'un motif carbonyloxy [-CO(O)-], liés l'un à l'autre ;
B : un résidu m-valent produit par élimination de tous les groupes hydroxy sur un polycarbonate comportant m groupes hydroxy aux extrémités, à la condition que -O-R- dans le motif répétitif [-OC(O)-O-R-] du polycarbonate soit un motif éther autre qu'un motif éther produit par ouverture de cycle d'un monoépoxyde.

**2.** Composé hydroxy selon la revendication 1, dans lequel la masse moléculaire moyenne en nombre du résidu B est de 300 à 5000 ; la masse moléculaire moyenne en nombre du groupe monovalent A est de 100 à 5000 ; et la masse moléculaire moyenne en nombre du tout est de 500 à 15000.

**3.** Composé hydroxy selon la revendication 1 ou 2, dans lequel le rapport en masse ($B/A_m$) du résidu B sur les m groupes monovalents A est de 1/9 à 9/1.

**4.** Composé hydroxy selon l'une quelconque des revendications 1 à 3, dans lequel un groupe éther [-O-] non lié au motif carbonyloxy peut en outre être présent dans les m groupes monovalents A, et le rapport molaire (groupe carbonate / groupe éther) d'un groupe carbonate [-OC(O)-O-] sur le groupe éther [-O-] non lié au motif carbonyloxy est de 7/3 à 10/0.

**5.** Composé hydroxy selon l'une quelconque des revendications 1 à 4, dans lequel R dans le résidu B est au moins un groupe divalent choisi dans l'ensemble constitué par un groupe alkylène composé de 3 à 20 groupes méthylène consécutifs (à la condition que le groupe alkylène puisse avoir une chaîne latérale en $C_1$ à $C_{12}$), un groupe alkylène-arylène, et un groupe arylène.

**6.** Composé hydroxy selon l'une quelconque des revendications 1 à 5, dans lequel, dans le groupe monovalent A, le motif éther produit par ouverture de cycle d'un monoépoxyde est un groupe oxyalkylène produit par ouverture de cycle d'un monoépoxyde en $C_2$ à $C_{20}$.

**7.** Procédé pour produire un composé hydroxy, qui comprend la réaction d'un polycarbonate représenté par la formule (II) suivante avec un mélange d'un monoépoxyde et de dioxyde de carbone en présence d'un catalyseur de polymérisation (C) pour produire un composé hydroxy représenté par la formule (I) suivante .

$$B\text{-}A_m \qquad (I)$$

$$B\text{-}(OH)_m \qquad (II)$$

où A et B représentent les groupes suivants, et m représente un entier de 1 à 8 ;
A : un groupe monovalent qui comporte un groupe hydroxy terminal et une chaîne carbonate composée d'un motif éther produit par ouverture de cycle d'un monoépoxyde et d'un motif carbonyloxy [-CO(O)-], liés l'un à l'autre ;
B : un résidu m-valent produit par élimination de tous les groupes hydroxy sur un polycarbonate comportant m groupes hydroxy aux extrémités, à la condition que -O-R- dans le motif répétitif [-OC(O)-O-R-] du polycarbonate soit un motif éther autre qu'un motif éther produit par ouverture de cycle d'un monoépoxyde.

**8.** Procédé pour produire un composé hydroxy selon la revendication 7, dans lequel le catalyseur de polymérisation (C) est un catalyseur complexe de coordination métallique de type porphyrine.

**9.** Procédé pour produire un composé hydroxy selon la revendication 8, dans lequel, en tant que catalyseur complexe de coordination métallique de type porphyrine, est utilisé un catalyseur complexe de coordination métallique de type porphyrine représenté par l'une des formules (1) et (2) suivantes :

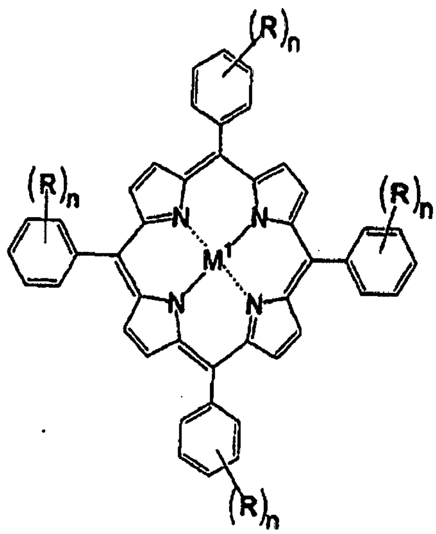
···(1)

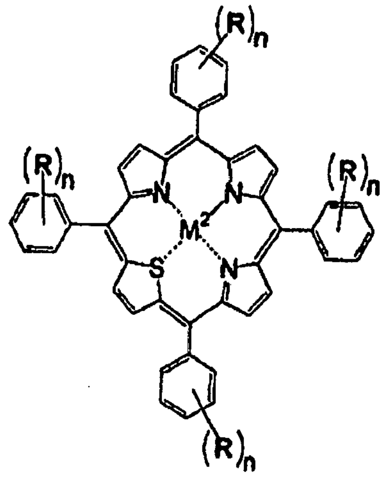
···(2)

dans lesquelles chaque R représente indépendamment un groupe méthyle, un groupe éthyle, un groupe n-propyle, un groupe isopropyle, un groupe n-butyle, un groupe sec-butyle, un groupe isobutyle, un groupe tert-butyle, un groupe phényle, un groupe méthoxy, un groupe éthoxy, un groupe trifluorométhyle, un atome de fluor, un atome de chlore ou un atome de brome, n représente un entier de 0 à 5, $M^1$ dans la formule (1) représente un sel métallique contenant Co ou Mn, et $M^2$ dans la formule (2) représente un sel métallique contenant Ni.

**10.** Procédé pour produire un composé hydroxy selon la revendication 8 ou 9, dans lequel un promoteur de type amine est utilisé en combinaison avec le catalyseur.

11. Prépolymère obtenu par réaction d'un composé hydroxy tel que défini dans l'une quelconque des revendications 1 à 6 dans lequel m vaut au moins 2, avec un composé polyisocyanate (D).

12. Polyuréthane obtenu par réaction d'un prépolymère tel que défini dans la revendication 11 avec un agent d'allongement de chaîne (E).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005232447 A
- JP 5339816 A


### Non-patent literature cited in the description


- *Macromolecules,* 1982, vol. 15 (2), 682-684